# EUROPEAN PATENT SPECIFICATION

(11) **EP 2 952 344 B1**
(45) Date of publication and mention of the grant of the patent: **04.03.2020**
(21) Application number: 14397520.9
(22) Date of filing: 06.06.2014
(51) Int. Cl.: B32B 21/08, B32B 21/10

(54) **A fire resistant plywood panel for flooring and a method for making the same**
Feuerbeständiges Sperrholzplatte für Bodenbeläge und Verfahren zur Herstellung davon
Panneau de contre-plaqué résistant au feu pour plancher et son procédé de fabrication

(43) Date of publication of application: 09.12.2015
(73) Proprietor: UPM Plywood Oy, 15140 Lahti (FI)
(72) Inventor: Koski, Anna, 15610 Lahti (FI)
(74) Representative: Berggren Oy, Tampere

(56) References cited:
- WO-A1-2010/125012
- DE-A1- 4 110 640
- DE-A1-102009 009 431
- DE-U1-202011 109 845
- US-A1- 2009 193 747

## Description

### Field of the Invention

The invention relates to fire and moisture resistant plywood panels. Such panels are often used as vehicle floorings. Thus, the invention relates to vehicles and their floorings. Moreover, the invention relates to methods for making fire resistant plywood panels.

### Background of the Invention

Plywood is commonly used in various structures, where light weight and mechanical strength is required. Various applications include furniture, buildings, walls, ceilings, and floors, to name a few. Wall, ceiling and floor may refers to that of a vehicle or of a building. Plywood comprises veneer layers that comprise wood. Wood, on the other hand does not resist well fire and/or humidity and/or moisture. It has been known to coat plywood in order to improve its resistance to fire and/or humidity.

It is the object of the invention to present embodiments of a plywood panel that resists fire better than known plywood panels; in particular for the same amount of investments used for fire protection and/or for the same amount of fire resistant materials, the panels of the embodiments resist heat better. Moreover, it is the object of the invention to present embodiments of methods for manufacturing such a plywood panel.

From US2009/0193747 it is known to use, in wood floorings for truck trailers, an underlay made of some fibre reinforced plastic, to reinforce the flooring. Such flooring may also improve the water resistance of the flooring. From WO2010125012 it is known to use one component polyurethane adhesive in between superimposed layers of wood. Moreover, it is possible to surround the composite material on all sides with a plastic layer.

### Summary of the Invention

It has been found that resistance against heat and/or moisture of a plywood panel can be improved by a suitable coating. Correspondingly, an embodiment of a fire resistant plywood panel, suitable for flooring of a vehicle, comprises a plywood part and a coating attached to the plywood part. Therein the plywood part comprises
- at least three veneer layers, each veneer layer comprising at least one wooden veneer and
- adhesive in between the veneer layers, whereby the plywood part comprises
- a first surface veneer layer, wherein all other veneer layers than the first surface veneer layer remain on the same side of the first surface veneer layer, and
- a second surface veneer layer, wherein all other veneer layers than the second surface veneer layer remain on the same side of the second surface veneer layer.

Furthermore, therein the coating comprises
- a first phenol film comprising paper and phenolic resin,
- a second phenol film comprising paper and phenolic resin, and
- a first glass fibre layer in between the first phenol film and the second phenol film.

In the embodiment of the fire resistant plywood panel, the first phenol film is attached, optionally through other layers, to the first glass fibre layer. Moreover, the second phenol film is attached to the first surface veneer layer of the plywood part. Furthermore, the second phenol film is attached, optionally through other layers, to the first glass fibre layer. Thereby a protective surface of the first phenol film, which protective surface does not face the first glass fibre layer, is exposed to an environment. Moreover, the protective surface of the first phenol film is arranged to protect the plywood part from heat and moisture of the environment.

The protective surface of the first phenol film is free from such solidified boiling droplets that comprise phenolic resin; e.g. from such solidified boiling droplets that have a one-dimensional size of from 0.1 µm to 500 µm.

Such a fire resistant plywood panel can be manufacture with a method for manufacturing a fire resistant plywood panel. An embodiment of the method comprises forming a preform for the fire resistant plywood panel by
- arranging available a plywood panel or a preform for a plywood panel,
- arranging on a first side of the plywood panel or the preform for a plywood panel
   - a second phenol film comprising paper and phenolic resin,
   - a first glass fibre layer, and
   - a first phenol film comprising paper and phenolic resin, whereby
   - the second phenol film is arranged closer to the plywood panel or the preform for the plywood panel than the first phenol film and
   - the first glass fibre layer is left in between the first phenol film and the second phenol film.

The embodiment comprises, after the formation of the preform for the fire resistant plywood panel, pressing, at a first temperature, using a first pressure, for a first period of time, the preform for the fire resistant plywood panel to form the fire resistant plywood panel. During said pressing, the first phenol film is pressed with a pressing part of a first effective pressing surface.

When, in the method, a plywood panel is arranged available, the manufacturing method can also be seen as a method for coating a plywood panel to form a fire resistant plywood panel.

The preform for the fire resistant plywood panel is pressed in such a way that (i) a constituent of the first phenol film or the second phenol film or (ii) a reaction product of the first phenol film or the second phenol film does not boil.

As will be detailed below, it has been observed that the aforementioned boiling would deteriorate the heat and moisture resistive properties of the coating of the resistant plywood panel.

### Description of the Drawings

- Fig. 1: shows, in a side view, a fire resistant plywood panel that has a fire resistant coating on a first side and the layered structure of the plywood part and the coating,
- Fig. 2a: shows, in a side view, a fire resistant plywood panel that has a thin fire resistant coating on a first side,
- Fig. 2b: shows, in a side view, a fire resistant plywood panel that has a thin fire resistant coating on two opposite sides,
- Fig. 2c: shows, in a side view, a fire resistant plywood panel that has a thick fire resistant coating on a first side,
- Fig. 2d: shows, in a side view, a fire resistant plywood panel that has a thick fire resistant coating on two opposite sides,
- Fig. 2e: shows, in a side view, a fire resistant plywood panel that has a thick fire resistant coating on a first side and a thin fire resistant coating on another, opposite, side,
- Fig. 3a: shows, in a side view, veneer layers of a plywood part of a fire resistant plywood panel and grain orientations therein,
- Fig. 3b: shows, in an exploded perspective view, veneer layers of a plywood part of a fire resistant plywood panel and grain orientations therein,
- Fig. 3c: shows, in a perspective view, veneer layers of a plywood part of a fire resistant plywood panel and veneers therein,
- Fig. 3d: shows a veneer,
- Fig. 3e: shows the internal structure of a glass fibre layer,
- Fig. 4a: shows, in a side view, the plywood part of a fire resistant plywood panel and a core thereof,
- Figs. 4b-4f: show, in a side view, examples of cores of the plywood part of a fire resistant plywood panel,
- Fig. 5a: shows, in a side view, a plywood part and grain orientations of a surface veneer layer and a veneer layer attached to it,
- Fig. 5b: shows, in a side view, a plywood part, grain orientation of a surface veneer layer, a veneer layer attached to it, a veneer layer attached to the latter, and grain orientations of these layers, the plywood part being oriented,
- Fig. 5c: shows, in a side view, a plywood part, grain orientations of a surface veneer layer and a veneer layers nearby, the plywood part being oriented,
- Figs. 6a-6b: show, in a side view, a fire resistant plywood panel comprising a soundproofing layer,
- Figs. 7a-7c: show, in a side view, embodiments of manufacturing a fire resistant plywood panel,
- Figs. 8a-8c: show, in a side view, embodiments of manufacturing a plywood part for a fire resistant plywood panel,
- Figs. 9a-9d: show, in a side view, an effective pressing surface, a surface of the preform for the fire resistant plywood panel during pressing, and a resulting protective surface,
- Figs. 10a-10d: show, in a side view, profiles of some surfaces, such as the protective surface or the effective pressing surface, and
- Figs. 11a-11d: show, in a side view, textures of some protective surfaces.

### Detailed Description of Embodiments

Plywood is commonly used in various structures where light weight and mechanical strength is required. Various applications include furniture, buildings, walls, ceilings, and floors, to name a few. Wall, ceiling and floor may refer to that of a vehicle or of a building. In such use, resistance against fire and/or moisture and/or humidity is commonly needed. Plywood comprises veneer layers that comprise wood. Wood, on the other hand does not resist well fire and/or moisture. Therefore, in order to improve the resistance of a plywood panel to fire and moisture, a suitable coating is provided to form a fire resistant plywood panel. The fire resistant plywood panel can be formed from an (uncoated) plywood panel, or the plywood panel can be manufactured the same time as the coating. The coating also provides for resistance against moisture.

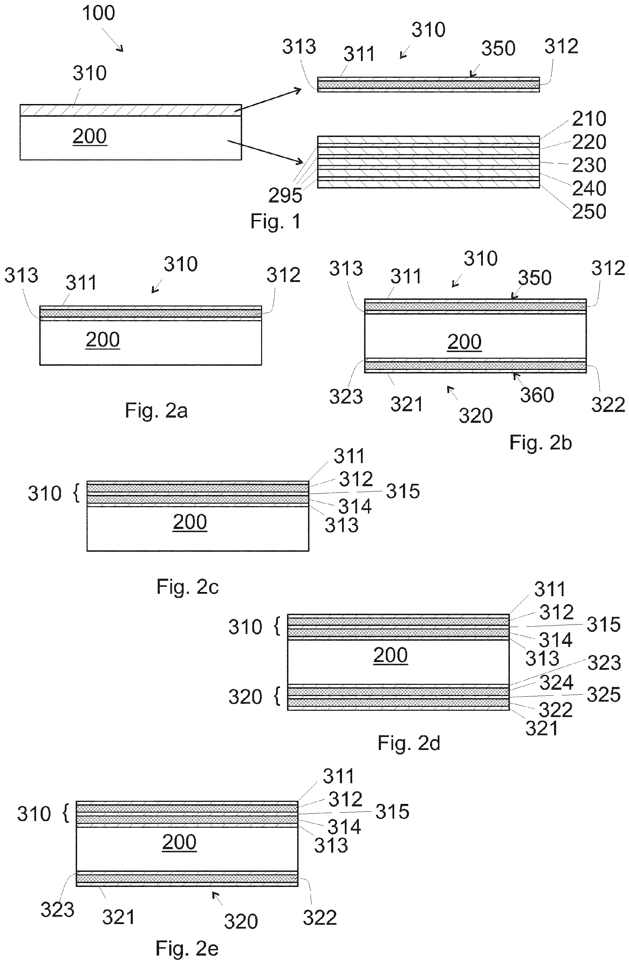

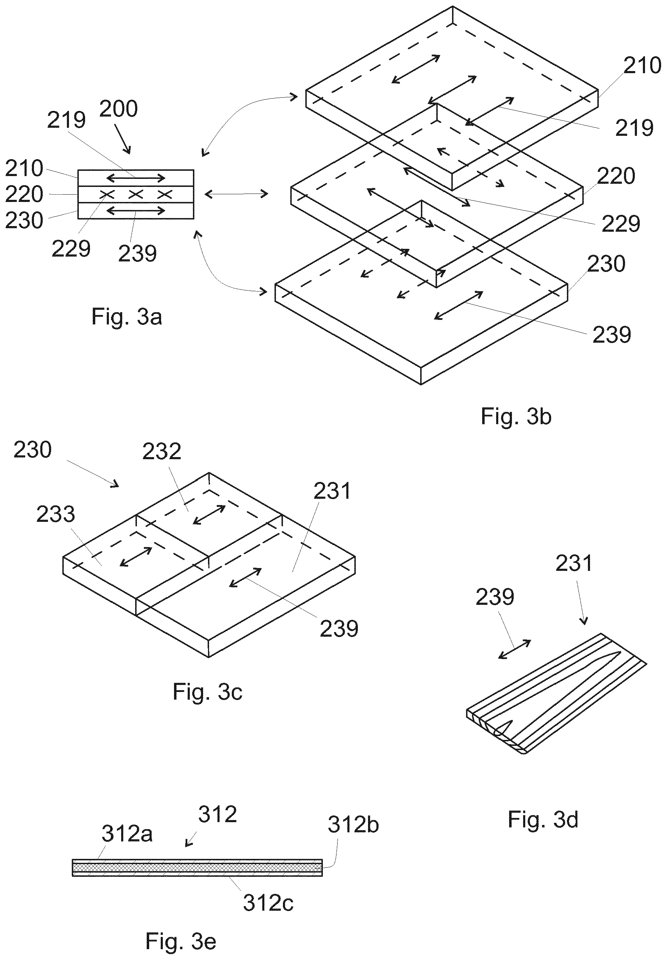

Referring to Fig. 1, a fire resistant plywood panel 100 according to an embodiment of the invention comprises a plywood part 200 and a coating 310. The plywood part 200 is a regular plywood panel. The plywood part 200 comprises at least three veneer layers 210, 220, 230, 240, 250, each veneer layer comprising at least one wooden veneer 231, 232, 233 (Figs. 3c and 3d) and adhesive 295 in between the veneer layers.

The plywood part 200 has a first length, a first width, and a first thickness. There terms are defined such that the first length is greater than or equal to the first width and the first width is greater than or equal to the first thickness. In the plywood part 200, the veneer layers 210-250 are arranged with respect to each other in the direction of the first thickness.

In this way, the plywood part 200 has two surface veneer layers (in Fig. 1, the layers 210 and 250). Thus, the plywood part 200 comprises a first surface veneer layer 210, wherein all other veneer layers (220, 230, 240, 250) than the first surface veneer layer 210 remain on the same side of first surface veneer layer 210. More precisely, all other veneer layers (220, 230, 240, 250) than the first surface veneer layer 210 remain on the same side of such a plane that has a surface normal parallel to the first height and includes a point of the first surface veneer layer 210. Furthermore, the plywood part 200 comprises a second surface veneer layer 250, wherein all other veneer layers (210, 220, 230, 240) than the second surface veneer layer 250 remain on the same side of such a plane that has a surface normal parallel to the first height and includes a point of the second surface veneer layer 250. I.e. wherein all other veneer layers (210, 220, 230, 240) than the second surface veneer layer 250 remain on the same side of the second surface veneer layer 250.

The fire resistant plywood panel comprises also the coating 310. The material of the coating 310, the amounts of materials of the coating, and the structure of the coating, in particular the structure of a protective surface 350 of the coating, are selected in such a way that the plywood part 200 is protected from the environment, in particular from heat and moisture, by the coating 310.

It has been found that a coating 310 that is reasonably cheap and easy to manufacture, and that provides for sufficient protection, comprises a first phenol film 311 comprising paper and phenolic resin; a second phenol film 313 comprising paper and phenolic resin; and a first glass fibre layer 312 in between the first phenol film 311 and the second phenol film 312. For example, the first phenol film 311 may comprise paper impregnated with phenolic resin. For example, the second phenol film 313 may comprise paper impregnated with phenolic resin.

As indicated in Fig. 1, the first phenol film 311 is attached to the first glass fibre layer 312. The first phenol film 311 may be directly attached to the first glass fibre layer 312; whereby no object remain in between these layers. In the alternative, some other material layers may be arranged in between the first phenol film 311 and the first glass fibre layer 312. As indicated in Fig. 1, the second phenol film 313 is attached to the first glass fibre layer 312. The second phenol film 313 may be directly attached to the first glass fibre layer 312; whereby no object remain in between these layers. In the alternative, some other material layers may be arranged in between the second phenol film 313 and the first glass fibre layer 312. Still further, the second phenol film 313 is attached to the first surface veneer layer 210 of the plywood part 200. More specifically, the second phenol film 313 is directly attached to the first surface veneer layer 210 of the plywood part 200.

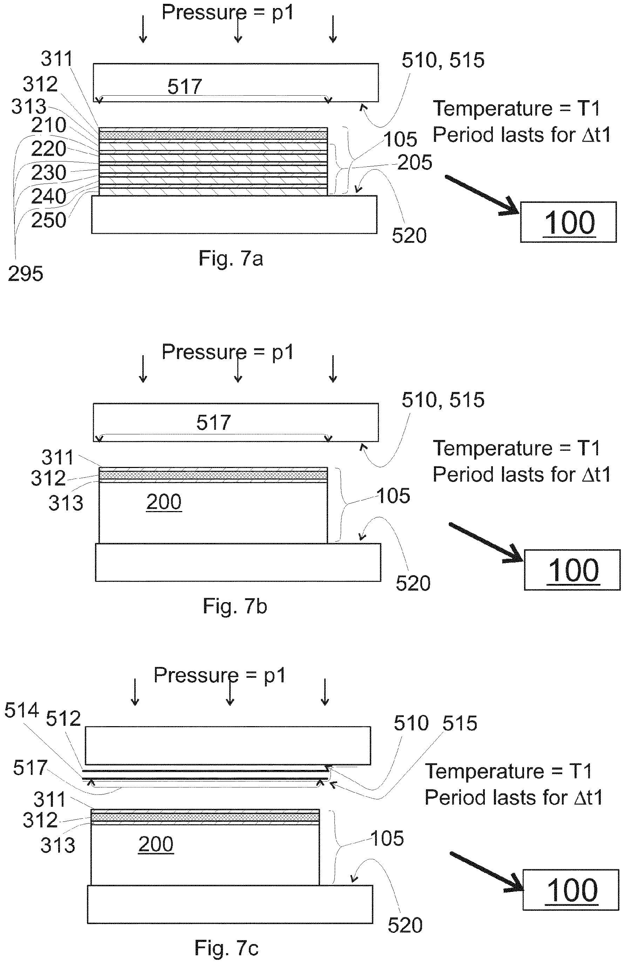

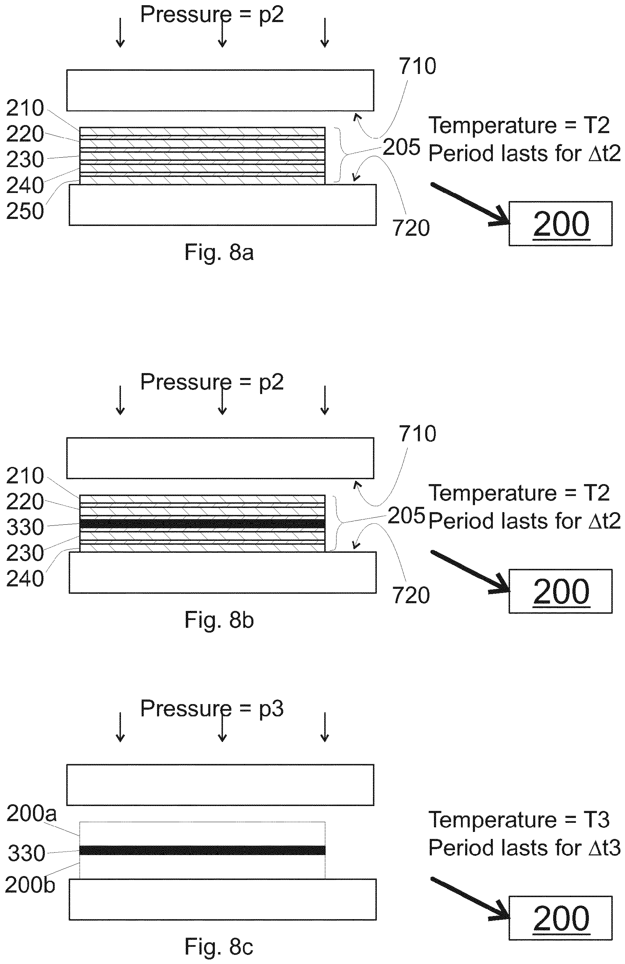

The first surface veneer layer 210 may have been thermally or chemically treated to improve bonding between the second phenol film 313 and the first surface veneer layer 210. Thermal treatment involves increasing the temperature of the veneers of the surface veneer layer. In the thermal treatment, the temperature may rise above the first or the second temperature (T1, T2; see figs 7a and 8a and the discussion below). An example of chemical treatment is acetylation. In the chemical treatment, the veneers may be soaked in a treatment agent or sprayed with a treatment agent. After the chemical treatment, the veneers may be impregnated with a treatment agent.

In this description, the term "phenolic resin" means phenol formaldehyde resin. Phenolic resin is the product of condensation of phenol (i.e. a compound having the formula C₆H₅OH) with formaldehyde. However, in the art, the short term "phenol" is commonly used for phenolic resin. The term short term "phenol film" is used throughout this document for a film comprising paper and phenolic resin.

Because of this structure, a protective surface 350 of the first phenol film 311, which protective surface 350 does not face the first glass fibre layer 312, is exposed to an environment. Therefore, the protective surface 350 protects, or is arranged to protect, the plywood part 200 of the panel 100 from heat and moisture of the environment. As the coating 310 protects from heat and fire, the time of ignition increases, as compared to a panel without coating 310. Moreover, the smoke production in case of fire decreases, as compared to a panel without coating 310.

The coating 310 has a second length, a second width, and a second thickness, these dimension being defined so that the second thickness is parallel to the first thickness. Moreover, the first glass fibre layer 312 is arranged in between the first phenol film 311 and the second phenol film 313 in the direction of the second thickness.

The aforementioned structure is beneficial not only for its resistance against heat and moisture, but also because of the ease and speed of manufacturing. Moreover, preferably, the first phenol film 311 is directly attached to the first glass fibre layer 312, because in this embodiment, the glass fibre layer 312, which resists heat and moisture well, is arranged close to the protecting surface 350, whereby the glass fibre layer 312 protects all the layers left to the other side of the glass fibre layer 312. E.g. soundproofing layer 330 (if present) is preferably arranged on the same side of the glass fibre layer 312 as the veneers layers of plywood part 200.

The structure of the second phenol film 313 has the technical effect that in the aforementioned way, the coating 310 is easy, fast, and cheap to manufacture. Namely, the paper can be impregnated with the phenolic resin, and thereafter the paper comprising phenolic resin constitutes a phenol film that can be stack onto a plywood part 200 or a preform for a plywood part. This applies also to the first phenol film 311. Also, because of process simplicity, the second phenol film 313 preferably has the same properties as the first phenol film 311. This decreases the number of different raw materials used in the manufacturing process.

The second phenol film 313 has at least three functions: (i) to attach the other layers, such as the first glass fibre layer 312 to the plywood part, (ii) to protect the plywood part from heat and/or moisture, and (iii) to prevent volatile gases from escaping from the plywood part 200 to the environment, whereby these volatile gases could burn.

The first glass fibre layer 312 has at least two functions: (i) to protect the plywood part from heat and/or moisture, because glass fibres can store heat and are thermally insulating, and (ii) to mechanically support the first phenol film 311 under thermal and/or mechanical and/or moisture stress. In particular, when the phenol film 311 partly decomposes due to excessive temperature, the first glass fibre layer 312 supports the remaining phenol film.

The first phenol film 311 has at least two functions: (i) to protect the first glass fibre layer 312 and the plywood part 200 from heat and/or moisture, and (ii) to prevent volatile gases from escaping from the plywood part 200 to the environment, whereby these volatile gases could burn. The permeability of the coating 310, and the reasons for the permeability, will be discussed in detail below.

Figures 7a-7c shows some embodiments for manufacturing such a fire resistant plywood panel 100. As depicted in these figures, an embodiment of a method for manufacturing a fire resistant plywood panel 100 comprises arranging available a plywood panel 200 or a preform for a plywood panel 205. The plywood panel 200, if used, forms the plywood part 200, as depicted in Figs. 7b and 7c. The plywood panel 200 can be arranged available by arranging available a pre-fabricated plywood panel 200. In an embodiment, the pre-fabricated plywood panel 200 is surface finished. In an embodiment, the surface finished panel 200 has been ground before applying the coating. The plywood panel 200 can be arranged available by manufacturing plywood panel 200. Moreover, the plywood part 200 can be manufactured, from the preform 205, at the same time the coating 310 is manufactured onto the surface veneer layer 210.

Referring to Figures 7a-7c, an embodiment of the method for manufacturing a fire resistant plywood panel 100 comprises forming a preform 105 for the fire resistant plywood panel 100 by arranging on a first side of the plywood panel 200 or the preform for a plywood panel 205
- a second phenol film 313 comprising paper and phenolic resin; e.g. paper impregnated with phenolic resin,
- a first glass fibre layer 312, and
- a first phenol film 311 comprising paper and phenolic resin; e.g. paper impregnated with phenolic resin, whereby
- the second phenol film 313 is arranged closer to the plywood panel 200 or the preform for the plywood panel 205 than the first phenol film 311 and
- the first glass fibre layer 312 is left in between the first phenol film 311 and the second phenol film 313.

This stack of (i,a) the plywood panel 200 or (i,b) the preform 205 for the plywood panel and (ii) at least the aforementioned layers 313, 312, 311 then form a preform 105 for the fire resistant plywood panel 100.

The second phenol film 313 may have the same composition as the first phenol film 311.

The embodiment further comprises pressing, at a first temperature T1, using a first pressure p1, and for a first period of time Δt1, the preform 105 for the fire resistant plywood panel to form the fire resistant plywood panel 100. Pressing the preform 105 for the fire resistant plywood panel may take place in between a first pressing surface 510 and a second pressing surface 520. In an embodiment, (i) the first phenol film 311, the first glass fibre layer 312, and the second phenol film 313, and (ii) the plywood panel 200 or the preform for the plywood panel 205 are arranged between the first pressing surface 510 and the second pressing surface 520, in such a way that the first phenol film 311 faces the first pressing surface 510.

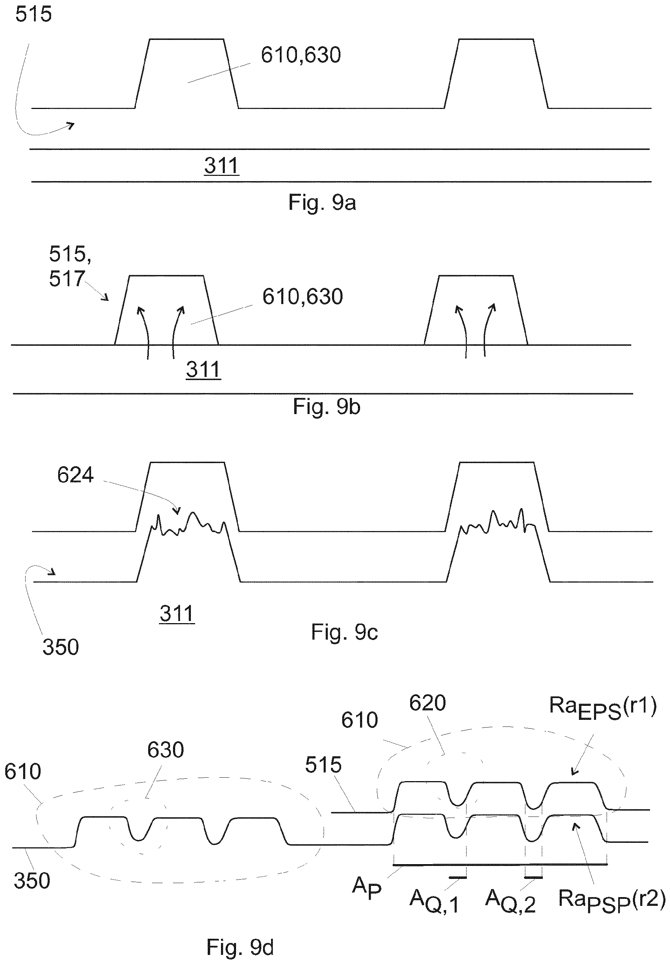

In an embodiment, the preform 105, in particular, the first phenol film 311 thereof is pressed. The phenol film 311 is pressed with a surface 510, 515 of an object or objects, in particular that part 517 of the surface 510, 515 of the object or objects that is arranged in the direction of surface normal of the plane of the phenol film 311, away from the first glass fibre layer 312. The surface 510, 515 of the object or objects will be referred to as an effective pressing surface, as will be detailed below. In an embodiment, the first phenol film 311 is pressed only with the pressing part 517 of the effective pressing surface 510, 515. Conversely, no other part of the effective pressing surface 510, 515 makes a contact with the first phenol film 311. It is also noted, that, provided the effective pressing surface 510, 515 comprises deep and small holes, not all parts of the pressing part 517 will make a contact with the phenol film 311, as will be detailed below (see also Fig. 9b).

Naturally, when a pre-fabricated plywood panel 200 is used, as indicated in Figs. 7b and 7c, the method may be considered as a method for coating a plywood panel 200 to form a fire resistant plywood panel 100. In the method for coating a plywood panel, a plywood panel 200 is arranged available, the preform 105 for the fire resistant plywood panel is formed as discussed above, and the preform 105 for the fire resistant plywood panel is pressed at the first temperature, using the first pressure, and for the first period of time, to form the fire resistant plywood panel 100. In addition, the pressing part 517 of an effective pressing surface 510, 515 is used to press the first phenol film 311.

When a pre-fabricated plywood panel 200 is not used, the preform 205 for plywood panel is arranged available by stacking veneers or veneer layers 210, 220, 230, 240, 250 onto each other, as depicted in Fig. 7a. In an embodiment, at least some of the veneers or the veneer layers, which are stacked, are coated and/or impregnated with adhesive in order to provide the adhesive 295 in between the veneer layers (see Fig. 1). Preferably when veneers or layers thereof are impregnated and/or coated with adhesive, the viscosity of the adhesive corresponds to that of a fluid; e.g. the viscosity of the adhesive at room temperature is less than 10 000 mPas. Preferably, the adhesive comprises phenolic resin, for reasons discussed later in context of the fire resistant panel 100. The adhesive may be a liquid mixture, wherein at least water, phenol (i.e. the compound having the formula C₆H₅OH), and formaldehyde are mixed. By chemical reactions, these compounds form phenolic resin.

As an alternative way of providing adhesive to the preform 205 for the plywood part, adhesive 295 can be supplied in the form of a film comprising support and the adhesive. The support may comprise paper. The paper may be impregnated with the adhesive. Phenolic resin can be used as the adhesive. In particular, in an embodiment, a phenol film comprising paper and phenolic resin, e.g. paper impregnated with phenolic resin, is arranged in between veneer layers to provide the adhesive 295. In particular, phenol films with the same composition can be used as the phenol films of the coating 210 and in between the veneer layers.

Regardless of whether a pre-fabricated panel 200 is used, or the whether the plywood panel is manufactured (separately or together with the coating 310), an embodiment of the fire resistant plywood panel 100 comprises paper and phenolic resin in between two veneer layers.

As for pressing the coating 310 onto the panel 200 or the preform 205 for a panel, the first temperature T1 and pressure p1, at which the coating 310 is pressed, affect the process and the properties of the resulting panel 100. The first temperature has the effect of heating the phenol films 311 and 313, which may result in boiling of their constituents, as will be discussed. Moreover, a high temperature may evaporate some gases, e.g. light hydrocarbons, from the layers of the plywood panel 200 or the preform 205 for the plywood panel. Also these gases may deteriorate the coating 310. Still further, for process speed and reasonable level of hardening of the adhesive of the coating, sufficiently high a temperature is used. It has been observed that the first temperature may be e.g. from 110 °C to 190 °C, preferably from 120 °C to 150 °C, and more preferably from 130 °C to 145 °C.

The first pressure may be from 1 MPa to 2 MPa. It has been noticed that a sufficiently high first pressure helps, during said pressing the preform 105, the phenolic resin of the phenol layer 311 to fill the holes 630 (if any) of the pressing part 517 of the effective pressing surface 515; whereby sufficiently high pressure reduces the risk of boiling the constituents of the phenol films or the reaction products therein during pressing. The first pressure p1 typically varies during said pressing such that after initial maximum pressure, the first pressure p1 diminishes until the end of the pressing.

It has been observed that manufacturing the coating 310 is typically cheaper, when separate layers are used instead of a pre-fabricated coating laminate.

Thus, embodiment of the method comprises forming such a preform 105 for the fire resistant plywood panel, wherein before said pressing,
- the first phenol film 311 can be detached from the first glass fibre layer 312 of the preform 105, and/or
- the first glass fibre layer 312 can be detached from the second phenol film 313 of the preform 105;
without tearing or otherwise breaking any of said first phenol film 311, said second phenol film 313, and said first glass fibre layer 312.

In an embodiment, the layers 311, 312, 313 are stacked onto each other, and lifted onto the plywood part 200 or the preform 205 thereof as a single coating preform.

In an embodiment, at least some of the layers 311, 312, 313 are stacked onto the plywood part 200 or the preform 205 thereof subsequently. Thus, an embodiment, wherein at least the second phenol film 313 and the first glass fibre layer 312 are separate comprises: at a first time, arranging on the plywood panel 200 or on the preform 205 for plywood panel the second phenol film 313, wherein the second phenol film is separate from the first glass fibre layer 312; and at a second time, arranging on the plywood panel 200 or on the preform for plywood panel 205 the first glass fibre layer 312; wherein the first time is different from the second time

In addition, or alternatively, an embodiment, wherein at least the first phenol film 311 and the first glass fibre layer 312 are separate comprises: at a third time, arranging on the plywood panel 200 or on the preform 205 for plywood panel the first phenol film 311, wherein the first phenol 311 film is separate from the first glass fibre layer 312; and at a second time, arranging on the plywood panel 200 or on the preform 205 for plywood panel the first glass fibre layer 312, wherein the third time is different from the second time.

When all the layers 311, 312, 313 are separate, as they are in a preferred embodiment, the third time is also different from the first time.

As indicated above, and with reference to Figs. 8a and 8b, the plywood panel 200 can be manufactured before coating it. Moreover, the plywood panel such manufactured, can be coated to obtain the fire resistant plywood panel 100, as indicated in Figs. 7b and 7c.

Referring to Figs. 8a and 8b, an embodiment for manufacturing the plywood panel 200 comprises (i) forming a preform 205 for the plywood panel by stacking veneers or veneer layers onto each other and arranging adhesive in between the veneers or veneer layers, and (ii) pressing (i.e. hot-pressing), at a second temperature T2, using a second pressure p2, and for a second period of time Δt2, the preform 205 for the plywood panel to the plywood panel 200. Pressing may take place in between a first surface for pressing plywood 710 and a second surface for pressing plywood 720.

The pressing of the preform 205 for a plywood panel is typically done in two phases. First, the preform 205 is pre-pressed in a cold press. The aim of pre-pressing is to flatten the preform 205 and allow the adhesive to develop tack. Both factors make it easier to feed the panels in to the pressing.

After pre-pressing the elements are pressed at the aforementioned second temperature. This is typically referred to as hot-press. The second temperature is typically from 125 °C to 135 °C, whereby the adhesive 295 of the preform 205 is hardened. The pressing time (i.e. the second period of time, Δt2) depends on the panel thickness. The second pressure p2 typically varies during said hot-pressing such that after initial maximum pressure, the second pressure p2 diminishes until the end of the hot-pressing.

As indicated also above, in an embodiment, at least some of the veneers or veneer layers are coated and/or impregnated with the adhesive, whereby the adhesive is arranged in between the veneer layers together with the coated veneers or veneer layers. In an embodiment, the viscosity of the adhesive corresponds to that of a fluid; e.g. the viscosity of the adhesive at room temperature is less than 10 000 mPas. In an embodiment, the adhesive comprises phenolic resin. Reasons will be discussed below in the context of the panel 100. The phenolic resin may be supported by a paper, as discussed above. As indicated in Fig. 8b, a soundproofing layer 330 can also be stacked into the preform 205 for a plywood panel 200. Alternatively, a soundproofing layer 330 can be attached in between two thin plywood panels 200a and 200b to form the plywood part 200; see Fig. 8c.

Preferably, the second temperature T2 (wherein the plywood panel 200 is manufactured) is lower than the first temperature T1 (wherein the pre-fabricated panel is coated). This has at least three effects: First, the adhesive of the coating 310 (i.e. the phenol of the films 311, 313) hardens faster, since a higher temperature can be used. Second, in the coating 310 process, mainly the coating 310 is heated, whereby the plywood part 200 is not heated as much. Provided that such a high temperature would be used to manufacture the plywood panel 200, the wood of the panel 200 could burn or at least darken and/or some wood degradation reactions might occur because of excessive heat in manufacturing. Third, the degree of hardening of the coating 310 can be adjusted so that the phenol of the coating 310 fully hardens, even if reasonably short first period of time Δt1 is used.

Referring to Figs. 7a and 7b, in an embodiment, no solid object is left in between the first phenol film 311 and the first pressing surface 510, whereby the first phenol film 311 is arranged to directly contact the at least a part of the first pressing surface 510, and the first pressing surface 510 forms a first effective pressing surface 515. Referring to Fig. 7c, in an embodiment an object (512 or 514) is left or objects (512 and 514) are left in between the first phenol film 311 and the first pressing surface 510, whereby (i) the object or objects 512, 514 and (ii) the first pressing surface 510 in combination form a first effective pressing surface 515, and the first phenol film 311 is arranged to directly contact at least part of the first effective pressing surface 515. An object 512 may be e.g. a wire mesh. An object 514 may be e.g. another wire mesh with different, possibly smaller, mesh size. An object 514 may be e.g. a smooth plate, e.g. metal plate.

As detailed in Table 1, the coating process has been experimented with (a) no object in between the surface 510 and the phenol film 311, (b) only the wire mesh 512 in between the surface 510 and the phenol film 311, and (c) both the wire mesh 512 and an additional smoothening object 514 in between the surface 510 and the phenol film 311. Naturally also other objects could be arranged in between the surface 510 and the phenol film 311 to obtain the effective pressing surface 515.

Referring to Figs. 7a-7c, the first effective pressing surface 515 may be larger than the preform 105 for the panel. However, the first effective pressing surface 515 comprises a pressing part 517, wherein the pressing part is used to press the preform 105; i.e. the first phenol film 311. In an embodiment, the pressing part 517 comprises only such areas or points of the effective pressing surface 515 that are arranged in the direction of the surface normal of the plane of the first phenol film 311 away from the first glass fibre layer 312. In an embodiment, the pressing part 517 (see Figs. 7a-7c and 9d) consists of such points r1 of the first effective pressing surface 515 that a straight line that is parallel to the surface normal of the plane of the first phenol film 311 and that comprises the point r1 also comprises a point r2 of the first phenol film 311.

It has surprisingly been found that the pressing surface 510, or the effective pressing surface 515 as will be discussed, see Fig. 7c, affects the resistance against fire of the resulting panel 100. As clear to a skilled person, only the pressing part 517 of the first effective pressing surface 515, in particular the texture thereof, affects the properties of the resulting panel 100. Experiments, as detailed below in Table 1, show that an effective pressing surface 515 having a smooth pressing part 517 results in a panel 100 that is more fire resistant than a panel pressed with a less smooth effective pressing surface 515.

The authors believe that this improved fire resistance is the result of preventing boiling of the constituents of the phenol film 311, 313 of the coating 310 or the reaction products of the phenol film(s), and/or preventing the humidity of the veneer layers of the plywood part 200 or preform 205 thereof from penetrating the first phenol film 311 during the coating process. The authors believe that a rough protective surface 350 of the first phenol film 311 (see Fig. 1), comprises small holes and/or passageways that increase the permeability for gases of the coating 310. Moreover, in the event of fire, the wooden veneers of the plywood part 200 heat. Thus, provided that the coating 310 is not gas tight, volatile gases that can burn may evaporate from the plywood part 200.

The authors believe that a coating 310 that is permeable to gases allow these volatile gases to be expelled from the plywood part, whereby, after having penetrated the coating 310, these gases burn, which results in particular in extended afterflaming time (see Table 1).

Moreover, the authors believe that the result for increased permeability of the coating 310 is, in particular, due to boiling of the constituents of the phenol film 311, 313 of the of the preform 105 for the fire resistant plywood panel or the reaction products thereof during said pressing; water in particular. When phenolic resin of the film 311, 313 is hardened, water is splitted off from the film. In hot environment, this water may or may not boil, depending on the temperature and pressure, as known to a skilled person. Furthermore, the paper of the phenol film 311, 313 may comprise humidity and/or moisture, which may try to evaporate from the paper of the film. This applies also to other phenol films such as 315, 321, 323, 325,which are discussed later. Still further, moisture of the plywood part 200 or the preform 205 thereof may also evaporate (boil) during pressing.

The boiling is discussed with reference to Figs. 9a-9c and 7a-7c. While pressing the preform 105 for the fire resistant panel 100 (comprising the first phenol film 311), at some instance, the first effective pressing surface 515 approaches the first phenol film 311, as indicated in Fig. 9a. At this time, the surface of the phenol film 311 may be at least to some extent hardened. Thereafter, as indicated in Fig. 9b, the effective pressing 515 surface, in particular the pressing part 517 of it, is pressed against the preform 105, i.e. the first phenol film 311. As indicated in Figs. 9a-9c, the pressing part 517 of the first effective pressing surface 515 may comprise such holes that do not become filled with the phenolic resin of the film 311; possibly partly because the phenolic resin of the film 311 may be at this point hardened to some degrees. As the phenol film 311 heats up and condensation reaction begins, its constituents and/or reaction products may boil, particularly if the pressing part 517 of the effective pressing surface 515 comprises a cavity (i.e. a hole) 630 or a penetrating pattern 610, as in Fib. 9b. Boiling is indicated with the arrows in Fig. 9b. Thus, boiling results in phenol droplets being expelled from the film 311. Finally, when the effective pressing surface 515 is lifted from the phenol film, as seen in Fig. 9c, these boiling droplets, which are solidified after said pressing, result in a rough surface 624 of the protrusion of the protective surface 350 of the panel 100.

When at least some of the constituents of the phenol film 311, 313 of the of the preform 105 for the fire resistant plywood panel - or the reaction products - boil, gas is rapidly formed by evaporation. When this gas expels from the phenol film 311, 313, it pushes the aforementioned phenol droplets out of the coating. In this way, boiling forms passages for gas into the coating 310, thereby reducing the resistance against fire as discussed above.

Therefore, a preferred embodiment of the method comprises pressing the preform 105 for the fire resistant plywood panel in such a way that a constituent of the first phenol film 311 or the second phenol film 313 does not boil.

Correspondingly, in an embodiment of the fire resistant plywood panel 100, the protective surface 350 of the first phenol film 311 is free from solidified boiling droplets. In an embodiment, the protective surface 350 is free from solidified boiling droplets comprising phenolic resin. In an embodiment, the protective surface 350 is free from such solidified boiling droplets that comprise phenolic resin and have a size from 0.1 µm to 500 µm. The size of a solidified droplet refers to the square root of the area of the projection of the droplet to the plane of the first protective surface 350. Throughout this description, a projection of an object (such as a hole, a droplet, a pattern, a protrusion, or an indentation) to a plane is the perpendicular projection, i.e. projection in the direction of the surface normal of the plane.

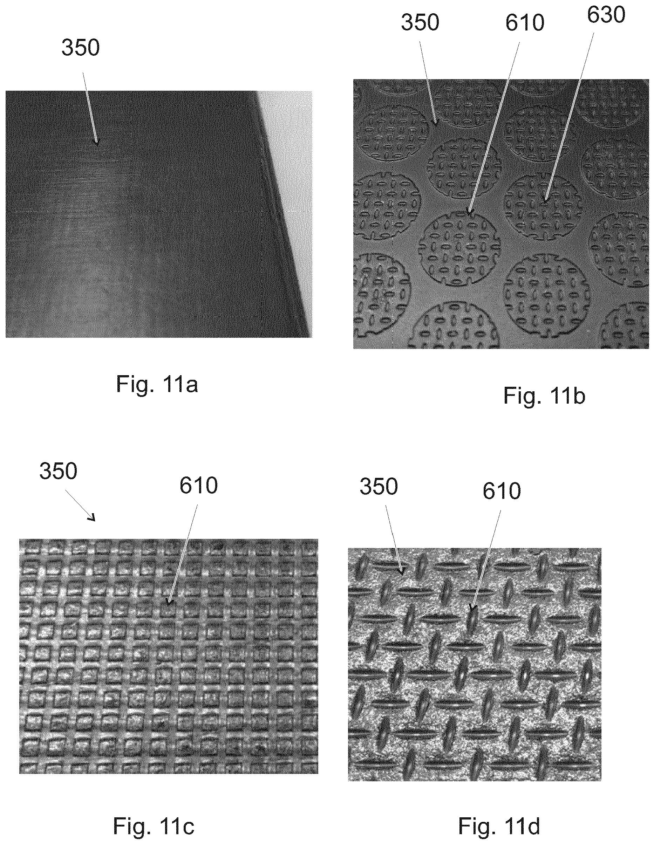

To more concretely show examples of surface 350 that result from boiling, and surfaces that are formed by preventing boiling, figures 11a-11d are provided. Figures 11a and 11b show protective surfaces 350 that are free from such solidified boiling droplets. Moreover, the protective surfaces 350 are smooth in the sub-millimeter length scale. Conversely, figures 11c and 11d show protective surfaces 350 that comprise such solidified boiling droplets. Thus, the protective surfaces 350 are rough in the sub-millimeter length scale.

As known to a skilled person, boiling of a constituent occurs, when the temperature is increased to the boiling point. At the boiling point, the vapor pressure of the constituent is equal to the pressure exerted on the constituent by the surrounding environment. When the pressing part 517 of the effective pressing surface 515 is smooth, the effective pressing surface 515 imposes a uniform pressure to the coating 310, which uniform pressure exceeds the vapor pressure of the constituents of the phenol films 311, 313. In particular, this uniform pressure equals the first pressure, as discussed above. Thus, the selection of the first temperature and the first pressure may be done in the aforementioned limits. Moreover, boiling does not occur.

Conversely, when the pressing part 517 of the effective pressing surface 515 is rough, it comprises cavities (i.e. holes) 610, 630 filled with air, see Fig. 9b. During pressing, the air in these holes is compressible, whereby locally the pressure in the coating may be less than the evaporation pressure during pressing. This is also because the phenolic resin of the phenol film 311 hardens to some degree, whereby the phenolic resin will not (necessarily) fill the hole 610, 630 as a liquid would. If the phenolic resin behaved as liquid, it would also fill the holes 610, 630, and the pressure in the holes would rise above the saturation pressure. Thus boiling would be prevented. In addition, it has been noticed that it a lot of phenolic resin is used in the firt phenol film 311, the cavities of the pressing part 517 are more easily filled than when only a little phenolic resin is used. Thus, the size of the cavities and the amount of phenolic resin may be selected in such a way that boiling is prevented. Thus, the size of the cavities and the amount of phenolic resin may be selected in such a way that the amount of boiling is reduced.

As discussed, boiling may locally occur near these cavities. A "cavity" here means a hole in macroscopic level, i.e. a cavity has a one-dimensional size of at least 1 mm. The one-dimensional size is the square root of the area of the projection of the cavity to the plane of the effective pressing surface 515. E.g. is the projection of the cavity has a rectangular shape, the one-dimensional size is the geometric mean of the length and the width of the projection.

When pressed with a pressing part 517 of the effective pressing surface 515, the phenolic resin of the phenol film 311 may harder from its surface. However, when the films 311, 312, 313 of the coating 310 and/or the adhesive 295 of the veneers and/or the humidity comprised by the veneer layers 210-250 and/or the volatile compounds comprised by the veneer layers 210-250 and/or the reaction products of the phenol films start to evaporate, pressure is generated in the structure. The pressure can release by breaking the hardened phenol surface in particular at the locations of the holes of the pressing part 517 of the effective pressing surface 515. In this way, an effective pressing surface comprising cavities (i.e. holes) will produce a coating 310 that is more permeable to gases than a coating 310 that has been manufactured by pressing with an effective pressing surface 515 that has a smooth pressing part 517.

The permeability of the coating 310 to gases affects in two ways. On one hand, burnable volatile gases from the plywood part 200 can penetrate the coating 310, whereby the resistance against fire of the fire resistant plywood panel 100 is reduced. On the other hand, humidity and/or moisture from the environment can penetrate through the coating 310 into the plywood part 200, whereby the resistance against moisture of the fire resistant plywood panel 100 is reduced.

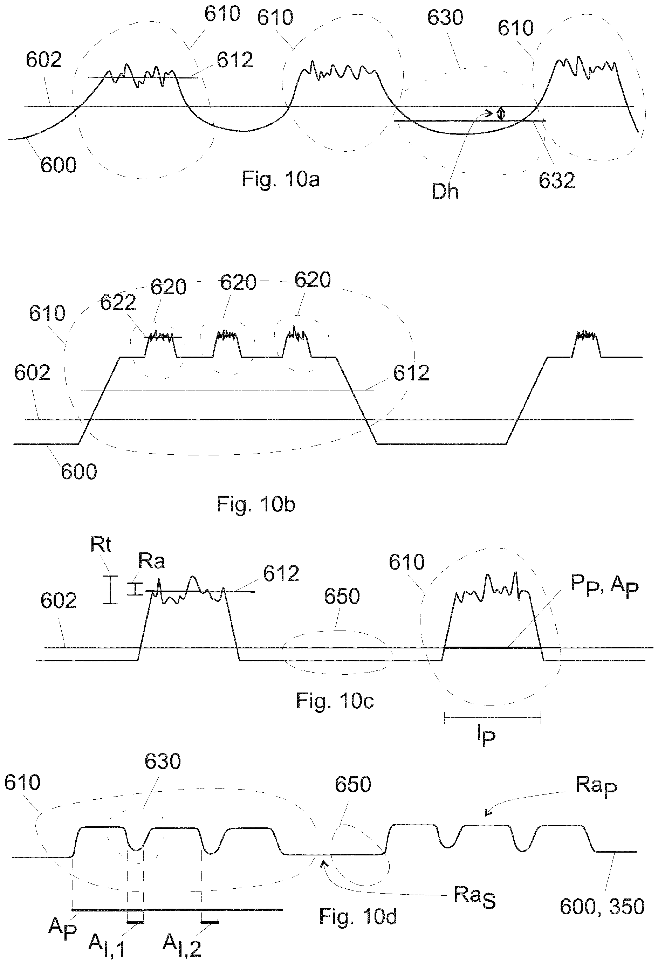

As evident from above, the smoothness and the texture of the pressing part 517 of the effective first pressing surface 515 has an impact in the resulting coating 310 and its permeability. To discuss some beneficial surfaces, following terms will be used in connection with the effective pressing surface 515, the pressing part 517 of the effective pressing surface 515, and the protective surface 350 of the first phenol film 311. These terms may refer also to the second side, when the plywood panel 100 comprises the second coating 320 (see Fig. 2b). Reference is made to Figs. 10a-10d and 11a-11d.

*Texture* refers to the tactile quality of a surface. For example the surface of Fig. 11a is smooth, the texture of Fig. 11b is smooth and patterned, and the textures of figs 11c and 11d are rough.

*Roughness* refers to such an unevenness of a surface, that occurs in the sub-millimeter length scale. For example, the smooth surface of Fig. 11a is not rough. In addition, the patterned surface of Fig. 11b is not rough, as the patterns thereon have a size larger than 5 mm. In contrast, the surfaces of Figs. 11c and 11d are rough. In Fig. 11c, the projecting patterns 610, i.e. the squares seen in the figure, have a size more than 1 mm, but less than 3 mm, and on the sub-millimeter scale the top of these patterns are rough. In Fig. 11c, the penetrating patterns, i.e. indentations 630 seen in the figure, are smooth. However, the projections in between these indentations also have a size of at least 1 mm, and have a rough surface in the sub-millimeter length scale.

*Plane of a surface* is the plane that best describes the average level of a rough or patterned surface. Mathematically it may be understood as a plane that fits best to the points of the surface. Fig. 10a shows an example of a surface 600 and the plane 602 of the surface 600.

*Plane of a pattern* is the plane that best describes the average level of a pattern; smooth or rough pattern. Mathematically it may be understood as a plane that fits best to the points of the pattern. Fig. 10a shows also patterns 610 protruding from the plane of the surface 602. Moreover, Fig. 10a shows the plane 612 of a pattern 610.

Plane of a bottom of a hole, plane of a bottom of an indentation, and plane of a top of a protrusion in defined similarly to the other two planes above. Referring to Fig. 10b, a pattern 610 may comprise a protrusion 620, which defines a plane 622 of the protrusion.

*Average roughness,* Ra, is the average deviation of the height of a point (i) on a surface, (ii) on a pattern of a surface, (iii) on a bottom of a cavity (or an indentation), the cavity being a hole of a said pattern or said surface, or (iv) on a top of a protrusion, the protrusion being a protrusion of a said pattern or said surface; from the corresponding surface. The height is measured from the (i) plane of the surface or (ii) the plane of the pattern, (iii) the plane of the bottom of the hole, or (iv) the plane of the top of the protrusion, respectively. Figures 10a-10c show rough surfaces, wherein the roughness in defined in relation to the plane of a pattern (612, Figs. 10a and 10c) or the plane of a projection on a pattern (622, Fig. 10b). In contrast to e.g. standard deviation, Ra is arithmetic average of absolute values of the height/depth of a point of a surface from the plane of that surface.

*Maximum roughness,* Rt, is the total height of the profile. Thus Rt is the height between the deepest valley and the highest peak on the evaluation surface.

*Pattern* is a tactile design on a surface or in a surface. Because being tactile, a pattern is or comprises at least one of a cavity, an indentation, a projection, or a protrusion, as measured from the plane of the surface comprising the pattern. Patterns may repeat on a plane to form the texture of the plane. With respect to roughness, a pattern may have a one-dimensional size of at least 1 mm. All figures 10a-10d show patterns. However, a smooth surface, such as that of Fig. 11a, does not have patterns. A pattern may comprise cavities (indentations) and/or protrusions. With respect to roughness, these cavities and/or indentations may have a one-dimensional size of at least 1 mm. In such a case, the pattern may have a one dimensional size of at least 3 mm.

*One-dimensional size* is the square root of the area of the projection of a pattern (or a cavity or an indentation or a protrusion) to the surface of the plane wherein the pattern (or a cavity or an indentation or a protrusion) is. For example, suppose that Fig. 10c shows the cross section of the square patterns of Fig. 11c. Then, the projection P_{P} of the pattern 610 to the surface 602 of the plane wherein the pattern is, is just the square P_{P} (which in the view of the Fig. 10c is only a line). If the area of this projection is A_{P}, then the one-dimensional size I_{P} of the pattern is (A_{P})^{½}, i.e. in this case, the length of the side of the square.

*Projecting pattern* is a pattern that projects out of the surface.

*Penetrating pattern* is a pattern that penetrates into the surface.

Whether a surface comprises projecting patterns or penetrating patterns can sometimes be determined e.g. in such a way that the patterns are separate from each other, optionally repeating. For example in Fig. 11c, the square projections are projecting patterns. In principle, the planar areas in between would be considered as penetrating patterns. In the alternative, the patterns may constitute a minor portion of the surface, as in the case of Fig. 11d, wherein the surface comprises indentations.

*Cavity* is a hole on a surface or a pattern; in particular in the pressing part 517 of the effective pressing surface 515. With respect to roughness, the one-dimensional size of a cavity may be at least 1 mm. A cavity may be a blind hole to prevent phenol from escaping through the cavity to the other side of the pressing surface 510. In an embodiment, the pressing part 517 of the effective pressing surface if free from such apertures, through which phenol can penetrate to the other side of the pressing part 517.

*Indentation* is a hole on a surface or a pattern; in particular in the first phenol film 311. With respect to roughness, the one-dimensional size of an indentation may be at least 1 mm. Figure 10d shows in indentation 630 in a projection pattern 610.

*Protrusion* is a projection on a surface or a pattern. With respect to roughness, the one-dimensional size of a protrusion may be at least 1 mm.

Referring to Figs. 10a to 10c, when boiling occurs, it results in rough surfaces, in particular the roughness shows on the surfaces of the projecting patterns 610, or the surface of the protrusions 620 of the projecting patterns 610. Moreover, the rest of the surface may be smooth; or at least the roughness of the rest of the surface is considerably less. Conversely, when boiling does not occur during coating, the roughness of the resulting protective surface 350 essentially constant, as evidenced in Figs. 10d, 11a, and 11b. Thus, in an embodiment, (a, see Fig. 11a)
- the protective surface 350 of the first phenol film is free from patterns 610 (see Fig. 11a), or (b)
- the protective surface 350 of the first phenol film comprises pattern 610 (as in Fig. 10d); whereby the protective surface 350 comprises an outside area that is outside the pattern, and
- the average roughness of the protective surface 350 at the pattern has a first roughness value Ra_{P}, the average roughness of the protective surface 350 at the outside area has a second roughness value Ra_{S}, and
- the first and the second roughness values are approximately equal, i.e. (i) 0.9 < Ra_{P}/Ra_{S} < 1.1 or (ii) Ra_{P}=Ra_{S}=0.

Herein the "roughness" may refer to the average roughness as discussed above. In the alternative, it may refer to the maximum roughness as discussed above.

In the above, the term "pattern" may refer to a pattern having a one-dimensional size of at least 1 mm; a rough surface may also be free from patterns. Thus, in an embodiment, the protective surface 350 of the first phenol film is free from patterns 610 having a one-dimensional size of at least 1 mm (i.e. free from indentations 610, 630 having a one-dimensional size of at least 1 mm and protrusions 610, 620 having a one-dimensional size of at least 1 mm; as indicated in Fig. 11a) OR the protective surface 350 of the first phenol film comprises pattern 610 having a one-dimensional size of at least 1 mm with the aforementioned roughness ratio.

With reference to Fig. 11b, it has been observed that material of the first phenol film 311 may fill cavities of the pressing part 517 of the first effective pressing surface 515 that are large as measured in the one-dimensional size. In such a case boiling will not occur. Also the amount of phenolic resin helps to fill these cavities, as discussed above. However, if the cavities of the pressing part 517 of the effective pressing surface 515 have proportionally a lot of protrusions, these cavities are not filled, whereby the aforementioned boiling may occur. Naturally, a projecting pattern on the first effective pressing surface 515 will produce a penetrating pattern into the protective surface 350 and vice versa. Thus, boiling will not result when the first effective pressing surface 515, or a pattern thereof, comprises only a reasonable amount of protrusions. Therefore, in an embodiment of the method, the texture of the pressing part 517 of the first effective pressing surface 515 is selected such that the pressing part 517 of the first effective pressing surface 515 is free from such penetrating patterns that have a one-dimensional size of at most 5 mm. In an embodiment, the pressing part 517 of the first effective pressing surface 515 is free from such penetrating patterns that have a one-dimensional size at most 3 mm. However, in the sub-millimeter length scale, the pressing part 517 of the first effective pressing surface 515 may have a non-zero roughness. Thus, in an embodiment of the method, the texture of the pressing part 517 of the first effective pressing surface 515 is selected such that the pressing part 517 of the first effective pressing surface 515 is free from such penetrating patterns that have a one-dimensional size of from 1 mm to 5 mm; or from 1 mm to 3 mm.

In an embodiment, the pressing part 517 of the first effective pressing surface 515 is free from such penetrating patterns that
- have a one-dimensional size (square root of A_{P}) of at least 5 mm (or at least 3 mm),
- comprise a protrusion 620 having a one-dimensional size of at least 1 mm, whereby the penetrating pattern 610 is not concave, and
- the total area (ΣA_{Q,i} over i) of the projection of the protrusions 620 of the penetrating pattern 610 to the plane of the effective pressing surface (each of such projection having the area A_{Q,i}; see Fig. 9d) is more than 33 % of the area A_{P} of the projection of the penetrating pattern 610 to the plane of the effective pressing surface.

It is noted that Fig. 11b implies a pressing part 517 of an effective pressing surface 515 with penetrating patterns that
- have a one-dimensional size (square root of A_{P}) of at least 5 mm (or at least 3 mm), and
- comprises a protrusion 620 having a one-dimensional size of at least 1 mm, whereby the penetrating pattern 610 is not concave.

However, the total area of the protrusions is significantly less than 33 %.

Conversely, when such an effective pressing surface is used to press the preform 105, the protective surface 350 is made. In an embodiment of the panel 100, the protective surface 350 of the first phenol film is free from such projecting patterns that have a one-dimensional size at most 5 mm. In an embodiment, the protective surface 350 of the first phenol film is free from such projecting patterns that have a one-dimensional size at most 3 mm. In an embodiment, the protective surface 350 of the first phenol film is free from such projecting patterns that have a one-dimensional size from 1 mm to 5 mm. In an embodiment, the protective surface 350 of the first phenol film is free from such projecting patterns that have a one-dimensional size from 1 mm to 3 mm.

In addition, in an embodiment, the protective surface 350 of the first phenol film is free from such projecting patterns that
- have a one-dimensional size of at least 3 mm; such as at least 5 mm,
- comprise at least an indentation 630 having a one-dimensional size of at least 1 mm, whereby the projecting pattern 610 is not convex, and
- the total area (ΣA_{I,i} over i) of the projection of the indentations 630 of the projecting pattern 610 to the plane of the protective surface (each projection having the area A_{I,i}, see fig. 10d) is more than 33 % of the area A_{P} of the projection of the projecting pattern to the plane of the protective surface.

Preferably the pressing part 517 of the first effective pressing 515 surface is not rough. In an embodiment of the method, the pressing part 517 of the first effective pressing surface 515 has an average surface roughness Ra that is less than 0.05 mm. The average roughness Ra for a surface is defined above and illustrated in Fig. 10c.

In an embodiment of the method, the pressing part 517 of the first effective pressing surface 515 has a maximum surface roughness Rt that is less than 0.1 mm. The maximum roughness Rt for a surface is defined above and illustrated in Fig. 10c.

In an embodiment of the method, the pressing part 517 of the first effective pressing surface 515 has an average surface roughness Ra that is less than 0.05 mm and the pressing part 517 of the first effective pressing 515 surface has a maximum surface roughness Rt that is less than 0.1 mm.

In an embodiment of the method, the pressing part 517 of the first effective pressing surface 515 has an average surface roughness Ra that is less than 0.02 mm and the pressing part 517 of the first effective pressing 515 surface has a maximum surface roughness Rt that is less than 0.05 mm.

If boiling does not occur, the texture of the pressing part 517 of the effective pressing surface may 515 is copied (replicated) onto the protective surface 350. Naturally, projections are replicated as indentations and cavities are replicated as projections. In this case, the pressing part 517 of the first effective pressing surface 515 comprises patterns 610, and the method comprises pressing the preform 105 for the fire resistant plywood panel in such a way that the patterns 610 of the pressing part 517 of the first effective pressing surface 515 are replicated onto the protective surface 350 of the resulting fire resistant panel 100.

Therefore, in an embodiment of the panel 100, the protective surface 350 of the first phenol film has an average surface roughness Ra that is less than 0.05 mm. In an embodiment of the panel 100, the protective surface 350 of the first phenol film has a maximum surface roughness Rt that is less than 0.1 mm. In an embodiment of the panel 100, the protective surface 350 of the first phenol film has an average surface roughness Ra that is less than 0.05 mm and the protective surface 350 of the first phenol film has a maximum surface roughness Rt that is less than 0.1 mm. In an embodiment of the panel 100, the protective surface 350 of the first phenol film has an average surface roughness Ra that is less than 0.02 mm and the protective surface 350 of the first phenol film has a maximum surface roughness Rt that is less than 0.05 mm.

In particular, in an embodiment, the local roughness of the pressing part 517 of the first effective pressing surface 515 is replicated onto the protective surface 350. Referring to Fig. 9d, in a corresponding embodiment, the pressing part 517 of the first effective pressing surface 515 has a first average roughness Ra_{EPS}(r1) that depends on the location r1 on the effective pressing surface 515. As discussed above, in the method, the fire resistant plywood panel 100 is formed, and the fire resistant plywood panel 100 comprises a protective surface 350 of the first phenol film, which protective surface 350 does not face the first glass fibre layer 312. Moreover, the protective surface 350 of the first phenol film of the panel 100 that is formed by the method has a second average roughness Ra_{PSP}(r2) that depends on the location r2 on the protective surface 350. In the embodiment, the preform 105 for the fire resistant plywood panel is pressed in such a way that the first and the second roughnesses are approximately equal, i.e. (i) 0.9 < Ra_{EPS}(r1) / Ra_{PSP}(r2) < 1.1 or (ii) Ra_{PSP}(r2) is zero, for all locations r1 on the pressing part 517 of the effective pressing surface 515, when r2 corresponds to such a location on the protective surface 350 that has been closest to r1 during said pressing.

Moreover, preferably, the pressing part 517 of the effective pressing surface 515 is free from large (as measured by the one-dimensional size) cavities that are deep. It has been noticed that shallow cavities on the pressing part 517 of the effective pressing surface 515 are filled rapidly by said boiling. Thus, only shallow cavities result is less permeable coating than deep cavities, provided that some amount of boiling is accepted. However, deep cavities do not fill, whereby a lot of boiling will occur. Thus, in an embodiment, the pressing part 517 of the first effective pressing surface 515 is free from such penetrating patterns that have a one-dimensional size of at most 5 mm (or at most 3 mm), and a depth Dh (see Fig. 10a) of at least 1 mm. In an embodiment, the pressing part 517 of the first effective pressing surface 515 is free from such penetrating patterns that have a one-dimensional size of at least 1 mm at most 5 mm (or at most 3 mm), and a depth Dh (see Fig. 10a) of at least 1 mm. In an embodiment, the pressing part 517 of the first effective pressing surface 515 is free from such penetrating patterns that have a one-dimensional size of at most 5 mm (or at most 3 mm), and a depth Dh of at least 0.5 mm. In an embodiment, the pressing part 517 of the first effective pressing surface 515 is free from such penetrating patterns that have a one-dimensional size of at least 1 mm and at most 5 mm (or at most 3 mm), and a depth Dh of at least 0.5 mm. In an embodiment, the pressing part 517 of the first effective pressing surface 515 is free from such penetrating patterns that have a one-dimensional size of at most 5 mm (or at most 3 mm), and a depth Dh of at least 0.2 mm. In an embodiment, the pressing part 517 of the first effective pressing surface 515 is free from such penetrating patterns that have a one-dimensional size of at least 1 mm and at most 5 mm (or at most 3 mm), and a depth Dh of at least 0.2 mm. The depth Dh of a cavity can be regarded as the distance between the plane 632 of the bottom of the cavity 630 and the plane 602 of the surface 600 (see Fig. 10a, even if 10a does not specifically refer to the effective pressing surface 515). The shallowness may also be related to the amount of phenolic resin in the first phenol film 311, since a thick phenol layer may more easily fill cavities, as discussed above.

In an embodiment, the texture of the pressing part 517 of the first effective pressing surface 515 does not comprise repeating patterns 610. In a corresponding embodiment of the panel 100, the texture of the protective surface 350 of the first phenol film does not comprise repeating patterns 610.

In an embodiment, the pressing part 517 of the first effective pressing surface 515 is smooth. In a corresponding embodiment of the panel 100, the protective surface 350 of the first phenol film is smooth.

What has been said above for the protective surface 350 of the first phenol film equally applies to the second protective surface 360 (see Fig. 2b) of the of the first phenol film 321 of the second coating 320, when the fire resistant plywood panel 100 comprises the second coating 320.

Moreover, what has been said above for the first effective pressing surface 515 or the pressing part 517 thereof equally applies to a pressing surface 520 (see Figs. 7c and 2b) or a corresponding effective pressing surface, at least part of which is arranged to contact the first phenol film 321 of the second coating 320, from the side not facing the plywood panel 200 or the preform 205 for the plywood panel, during said pressing the preform 105 for the panel 100.

It has been observed that to obtain a cheap, yet reasonably fire resistant plywood panel, in the aforementioned manufacturing process the specific weight of the first phenol film 311 may be from 75 g/m² to 300 g/m²; preferably from 100 g/m² to 250 g/m²; and more preferably from 110 g/m² to 150 g/m². Because of the good fire resistant properties of phenolic resin, the first phenol film 311 preferably comprises a lot of phenolic resin, and conversely, only little paper. However, because of the role of the paper as a mechanical support for the phenolic resin, the first phenol film 311 preferably comprises at least a reasonable amount of paper. In an embodiment, the paper of the first phenol film 311 constitutes from 25 % to 55 % of the specific weight of the first phenol film. In an embodiment, the paper of the first phenol film 311 constitutes from 30 % to 40 % of the specific weight of the first phenol film 311. As is evident, the aforementioned specific weight and the aforementioned weight percentage of paper can be selected independently from each other. Moreover, as is evident, the aforementioned specific weight and the aforementioned weight percentage of paper can be selected also in combination with each other resulting the following six different combinations: (i) specific weight from 75 g/m² to 300 g/m² and percentage of paper from 25 % to 55 %; (ii) specific weight from 75 g/m² to 300 g/m² and percentage of paper from 30 % to 40 %; (iii) specific weight from 100 g/m² to 250 g/m² and percentage of paper from 25 % to 55 %; (iv) specific weight from 100 g/m² to 250 g/m² and percentage of paper from 30 % to 40 %; (v) specific weight from 110 g/m² to 150 g/m² and percentage of paper from 25 % to 55 %; and (vi) specific weight from 110 g/m² to 150 g/m² and percentage of paper from 30 % to 40 %.

Similar considerations apply also to other phenol films, such as the second phenol film 313, a third phenol film 315 (fig. 2c), a first phenol film of a second coating 321 (Fig. 2b), a second phenol film of a second coating 323 (Fig. 2b), and a third phenol film of a second coating 325 (Fig. 2d); as well as other similar phenol films that can be used, e.g. if more glass fibre layers are used. Still further similar considerations may apply to the adhesive 295 in between the veneer layers of the preform 205 for the plywood part, provided that a phenol film comprising paper and phenolic resin is used to form the adhesive layer 295 of the plywood part 200.

Preferably the second phenol film 313 has the same specific weight as the first phenol film 311. Preferably paper of the second phenol film 313 constitutes a part of the specific weight of the second phenol film 313, and paper of the first phenol film 311 constitutes the same part of the specific weight of the first phenol film 313. More preferably, the second phenol film 313 has the same specific weight as the first phenol film 311, paper of the second phenol film 313 constitutes a part of the specific weight of the second phenol film 313, and paper of the first phenol film 311 constitutes the same part of the specific weight of the first phenol film 313.

Similar considerations apply also to other phenol films, such as a third phenol film 315 (fig. 2c), a first phenol film of a second coating 321 (Fig. 2b), a second phenol film of a second coating 323 (Fig. 2b), and a third phenol film of a second coating 325 (Fig. 2d)); as well as other similar phenol films that can be used, e.g. if more glass fibre layers are used.

In the manufacturing process, i.e. during the pressing, the phenolic resin of the phenol films of a coating 310, 320 may flow into other parts of the coating, in particular into the glass fibre layer or layers. Thus, the content of phenolic resin in the layers of the manufactures panel 100 are not necessarily the same as those given above. However, the total amount of phenolic resin and paper does not change is said pressing the preform 105 for the panel.

In an embodiment of the method, the first glass fibre layer 312 is arranged in between the phenol films 311, 313. Compared to other materials known to enhance fire resistance, glass fibers demonstrate excellent thermal and impact resistance, high tensile strength, good chemical resistance, and outstanding insulating properties. They can be tailored to create different types of glass fibers. Moreover, glass a fiber does not absorb water, and it neither swells, stretches nor disintegrates, which allows its utilization also in high moisture environments. Glass fibres do not readily rot and they continue to maintain their mechanical strength in humid environments. Thus, glass fibres of the layer 312 provide increased strength and stability which paper of the layers 311, 313 cannot achieve.

Plain glass fibres, however, do not easily bond to other glass fibres. Thus, to provide a pre-fabricated layer comprising glass fibres, the glass fibre layer comprises also binder. Referring to Fig. 3e, in order to improve the mechanical integrity of the first glass fibre layer 312, the first glass fibre layer 312 may have a laminated structure comprising a first binder layer 312a, a glass fibre core 312b, and a second binder layer 312c, in such a way that the glass fibre core 312b is arranged in between the first 312a and the second 312c binder layers. In addition to the aforementioned improved integrity, the binder also plays a role in bonding the glass fibre layer 312 with the phenol films 311, 313. Thus, a glass fibre layer, such as a glass fibre veil (or felt) may have a binder layer compatible with phenolic resin.

The material of the binder layers 312a, 312c is herein referred to as bonding agent. In an embodiment the bonding agent comprises poly vinyl alcohol (PVA). In an embodiment the bonding agent comprises synthetic resin. Both PVA and synthetic resin have been found to be compatible with phenolic resin, yet providing sufficient heat resistance.

In an embodiment of the method, the first glass fibre layer 312, in particular the glass fibre core 312b, comprises non-woven glass fibres. In an embodiment the first glass fibre layer comprises a glass fibre veil. In an embodiment the first glass fibre layer comprises a glass fibre felt. These (non-woven, veil, and felt) all have the technical effect that the phenolic resin of the first phenol film 311 and/or the second phenol film 313 relatively easily flows through the first glass fibre layer 312 during pressing. In this way, the phenol films 311, 313 become strongly bonded with the first glass fibre layer 312. In particular, when the manufactured panel 100 becomes heated (during use after the manufacturing process), the first phenol layer 311 does not easily peel off from the first glass fibre layer 312, and the first glass fibre layer 312 mechanically supports the first phenol film 311, which has the protective surface 350. Therefore, a non-woven first glass fibre layer 312, such as a veil of a felt, provides for good fire resistance, electrical insulation, and dimensional stability to temperature, humidity, and impact force. Moreover, non-wowen glass fiber material can be used to enhance surface finish, weatherability, appearance and smoothness.

To provide for sufficient protection from heat while at the same time being reasonably low cost, the specific mass of the glass fibre core 312b may be e.g. from 15 g/m² to 800 g/m², such as from 15 g/m² to 350 g/m², preferably from 20 g/m² to 90 g/m², and more preferably 25 g/m² to 50 g/m² or from 25 g/m² to 30 g/m².

To provide for sufficient protection from heat while at the same time being reasonably low cost, the specific mass of the whole first glass fibre layer 312 may be e.g. from 20 g/m² to 1000 g/m², such as from 20 g/m² to 400 g/m², preferably from 30 g/m² to 100 g/m², such as 35 g/m².

The glass fibre core 312b may constitute from 65 % to 85 % of the specific weight of the first glass fibre layer 312. Preferably glass fibre core 312b constitutes from 70 % to 80 % of the specific weight of the first glass fibre layer 312. As a result, glass fibres may constitute from 65 % to 85 % of the specific weight of the first glass fibre layer 312. Preferably glass fibres constitute from 70 % to 80 % of the specific weight of the first glass fibre layer 312.

Conversely, the bonding agent may constitute from 15 % to 35 % of the specific weight of the first glass fibre layer 312. Preferably, the bonding agent constitutes from 20 % to 30 % of the specific weight of the first glass fibre layer 312. In the alternative or in addition, the bonding agent may constitute from 3 g/m² to 25 g/m² of the specific weight of the first glass fibre layer 312. Preferably, the bonding agent constitutes from 5 g/m² to 10 g/m² of the specific weight of the first glass fibre layer 312.

In an embodiment, the first glass fibre layer 312 comprises only one type of bonding agent, such as either poly vinyl alcohol (PVA) or synthetic resin. In an embodiment, the first glass fibre layer 312 comprises at least two types of bonding agents, such as poly vinyl alcohol (PVA) and synthetic resin.

In an embodiment, the first glass fibre layer 312 comprises from 20 wt-% to 30 wt-% bonding agent. The low level of binder improves the impregnation of phenolic resin to the glass fibre layer during pressing. In an embodiment, the first glass fibre layer 312 comprises 23 wt-% poly vinyl alcohol (PVA). In an embodiment, the first glass fibre layer 312 comprises 25 wt-% synthetic resin. These material compositions were found to be specially suitable for the fire resistant plywood panel 100 as discussed above.

Furthermore, it has been found that the glass fibres of the first glass fibre layer 312 itself have influence on the fire resistive properties of the fire resistant plywood panel. Good insulations properties have been observed to be obtainable with long glass fibres and/or glass fibres having a special aspect ratio. Moreover, these properties may affect also the bonding of the first glass fibre layer 312 to the phenol films 311, 313.

In an embodiment, the first glass fibre layer 312 comprises glass fibres having a length from 5 mm to 15 mm, such as from 6 mm to 10 mm; such as 6 mm or 10 mm. In an embodiment, the first glass fibre layer 312 comprises glass fibres having an aspect ratio more than 100; preferably more than 500; and more preferably more than 1000. Some possible combinations of properties of glass fibres of the first glass fibre layer 312, and/or other glass fibre layers 314, 322, 324 include:
- a length from 5 mm to 15 mm and an aspect ratio more than 100;
- a length from 5 mm to 15 mm and an aspect ratio more than 500;
- a length from 5 mm to 15 mm and an aspect ratio more than 1000;
- a length from 6 mm to 10 mm and an aspect ratio more than 100;
- a length from 6 mm to 10 mm and an aspect ratio more than 500;
- a length from 6 mm to 10 mm and an aspect ratio more than 1000;
- a length of 6 mm and an aspect ratio more than 100;
- a length of 6 mm and an aspect ratio more than 500;
- a length of 6 mm and an aspect ratio more than 1000;
- a length of 10 mm and an aspect ratio more than 100;
- a length of 10 mm and an aspect ratio more than 500; and
- a length of 10 mm and an aspect ratio more than 1000.

In an embodiment, the first glass fibre layer 312 comprises glass fibres having a length of 10 mm and a thickness of 10 µm. In an embodiment, the first glass fibre layer 312 comprises glass fibres having a length of 6 mm and a thinkess of 11 µm.

There are many types of glass fibres, like fibres made of E-glass, S-glass, or C-glass. Different types of glass fibres can be manufactured by varying the composition of constituents. E-glass is the most commonly used, because its good strength properties and low cost. In an embodiment, the first glass fibre layer 312 comprises glass fibres made of E-glass. In an embodiment, also another glass fibre layer (314, 322, 324) comprises E-glass. The glass fibre layer may comprise glass fibres made of E-glass and having any of the lengths as discussed above. The glass fibre layer may comprise glass fibres made of E-glass and having any of the thicknesses as discussed above. The glass fibre layer may comprise glass fibres made of E-glass and having any combination of the length and thickness as listed above.

These considerations relating to the first glass fibre layer 312 apply also to other glass fibre layers, such as a second glass fibre layer 314 (Fig. 2c) of the same coating, a first glass fibre layer of a second coating 322 (Fig. 2d), and/or a second glass fibre layer of a second coating 324 (Fig. 2d).

If another glass fibre layer is present, preferably the other glass fibre layer (or the other glass fibre layers) is (or are) preferably made from the same material as the first glass fibre layer 312.

In the manufacturing process, i.e. during the pressing, the properties of the glass fibre layer(s) is/are not substantially affected. Therefore, the aforementioned values apply also the glass fibre layers, especially to the first glass fibre layer 312, when being part of the manufactured fire resistant plywood panel 100.

However, some of the phenolic resin of the phenol films 311, 312 may flow into the first (or second) glass fibre layer 312 during said pressing of the preform 105 for the fire resistant plywood panel. Therefore, some properties of the coating 310 of the (ready, pressed) fire resistant plywood panel 100 are summarized below.

In an embodiment of the fire resistant plywood panel 100, wherein the coating 310 comprises only one glass fibre layer 312, the coating 310 comprises from 120 g/m² to 600 g/m² phenolic resin; preferably from 120 g/m² to 400 g/m² phenolic resin; more preferably from 150 g/m² to 200 g/m² phenolic resin.

In an embodiment of a panel 100, wherein the coating 310 comprises only one glass fibre layer having a glass fibre core 312b, the specific mass of the glass fibre core 312b may be e.g. within the aforementioned limits for the glass fibre core.

In an embodiment of a panel 100, wherein the coating 310 comprises only one glass fibre layer, the coating 310 comprises from 30-wt% to 80-wt% phenolic resin. Preferably the coating 310 comprises from 50-wt% to 70-wt% phenolic resin.

In an embodiment of a panel 100, wherein the coating 310 comprises only two glass fibre layers, the coating comprises from 200 g/m² to 900 g/m² phenolic resin; preferably from 200 g/m² to 500 g/m² phenolic resin; more preferably from 220 g/m² to 300 g/m² phenolic resin.

In an embodiment of a panel 100, wherein the coating 310 comprises only two glass fibre layers, both having a glass fibre core 312b, the specific mass of the each glass fibre core 312b may be e.g. within the aforementioned limits for the glass fibre core.

In an embodiment of a panel 100, wherein the coating 310 comprises only two glass fibre layers, the coating 310 comprises from 30-wt% to 80-wt% phenolic resin. Preferably the coating 310 comprises from 50-wt% to 70-wt% phenolic resin.

In some embodiments of the panel 100, the coating comprises a number M of glass fibre layers, wherein the number M is at least one, optionally multiple. In such embodiment, the coating preferably comprises from 80×M g/m² to 300×M g/m² phenolic resin per each glass fibre layer. For example, a coating comprising three glass fibre layers may comprise from 240 g/m² to 600 g/m² phenolic resin.

Moreover, in embodiments of the panel 100, wherein the coating 310 comprises M glass fibre layers (M≥1), each having a glass fibre core 312b, the specific mass of the each glass fibre core 312b may be e.g. within the aforementioned limits for the glass fibre core.

Still further in a preferred embodiment of the method, the specific mass of the first glass fibre layer 312 (prior to pressing) is from 25 g/m² to 50 g/m² and the specific mass of the first phenol film 311 (prior to pressing) is from 110 g/m² to 220 g/m². In another preferred embodiment of the method, the specific mass of the first glass fibre layer 312 (prior to pressing) is from 25 g/m² to 50 g/m² and the phenolic resin constitutes from 70 g/m² to 140 g/m² of the specific mass of the first phenol film 311. In another preferred embodiment of the method, the specific mass of the first glass fibre layer 312 (prior to pressing) is from 25 g/m² to 50 g/m² and the specific mass of the first phenol film 311 (prior to pressing) is from 110 g/m² to 150 g/m². In another preferred embodiment of the method, the specific mass of the first glass fibre layer 312 (prior to pressing) is from 25 g/m² to 50 g/m² and the phenolic resin constitutes from 75 g/m² to 85 g/m² of the specific mass of the first phenol film 311.

In order to keep the manufacturing costs relatively low, in an embodiment of the fire resistant plywood panel 100, the first phenol film 311 is attached directly to the first glass fibre layer 312. Moreover, in an embodiment of the fire resistant plywood panel 100, the first phenol film 311 is attached directly to the first glass fibre layer 312 and the second phenol film 313 is attached directly to the first glass fibre layer 312. In this way, the coating 310 comprises only one glass fibre layer, i.e. the layer 312, and the two phenol layers 311, 313.

In order to further increase the fire resistance of the fire resistant plywood panel 100, further layers can be arranged to the coating 310. Referring to Fig. 2c, in an embodiment the coating 310 further comprises a second glass fibre layer 314 and a third phenol film 315. In this embodiment, the second glass fibre layer 314 is arranged in between the first phenol film 311 and the second phenol film 313, the third phenol film 315 is arranged in between the first glass fibre layer 312 and the second glass fibre layer 314, and the layers (311, 312, 313, 314, 315) of the coating 310 are attached to each other, optionally through other layers (in case the coating comprises also such other layers, not shown in the figures). Also Figs. 2d and 2e show a first coating 310 comprising two glass fibre layers. The first phenol film 311 may be attached directly to the first glass fibre layer 312.

Glass fibre layers, even if increase the resistance against fire, also increase the manufacturing costs of the panel 100. Thus, preferably the coating 310 comprises at most two glass fibre layers (312, 314).

Correspondingly an embodiment of the manufacturing method for manufacturing a panel 100 with a coating 310 comprising two glass fibre layers 312, 314 comprises arranging, before said pressing the preform 105 for the fire resistant plywood panel, on the plywood panel 200 or the preform 205 for the plywood panel, a second glass fibre layer 314 in between the first phenol film 311 and the second phenol film 313; and arranging, before said pressing the preform 105 for the fire resistant plywood panel, on the plywood panel 200 or the preform for plywood panel 205, a third phenol film 315 in between the first glass fibre 312 layer and the second glass fibre layer 314. In this way, a preform 105 for the panel 100 is formed, the preform comprising the two glass fibre layers. The third phenol film 315 comprises paper and phenolic resin. The third phenol film 315 may have the same composition as the first phenol film 311.

Referring to Figs. 2b, 2d, and 2e, irrespective of the type of the coating 310, an embodiment of the panel 100 comprises a second coating 320. In this embodiment, the coating 310 is arranged on a first side of the plywood part 200. The fire resistant plywood panel 100 further comprises a second coating 320 attached on a second side of the plywood part 200, wherein the second side is opposite to the first side.

What has been said above for the coating 310 equally applies to the second coating 320. Thus applies to the properties of the protective surface 360 and the general structure.

Referring to Fig. 2b, in an embodiment, the second coating 320 comprises a first phenol film of the second coating 321 comprising paper and phenolic resin, a second phenol film of the second coating 323 comprising paper and phenolic resin, and a first glass fibre layer of the second coating 322 in between the first phenol film of the second coating 311 and the second phenol film of the second coating 313. Moreover, the first phenol film of the second coating 321 is attached, optionally through other layers, to the first glass fibre layer of the second coating 322. The second phenol film of the second coating 323 is attached to the second surface veneer layer 250 (see Fig. 1) of the plywood part 200. In an embodiment, the second phenol film of the second coating 323 is directly attached to the second surface veneer layer 250. Moreover, the second phenol film of the second coating 323 is attached, optionally through other layers, to the first glass fibre layer of the second coating 322. In this way, a second protective surface 360 of the of the first phenol film of the second coating 321, which second protective surface 360 is not attached to the first glass fibre layer of the second coating 321, is exposed to an environment for protecting the plywood part 200 from heat and moisture of the environment on the second side.

Correspondingly an embodiment of the manufacturing method for manufacturing a panel 100 with the second coating 320 comprises arranging on a second side of the plywood panel 200 or the preform for plywood panel 205, which second side is opposite to the first side, the following layers
- a second phenol film 323 of a second coating comprising paper and phenolic resin, e.g. paper impregnated with phenolic resin,
- a first glass fibre 322 layer of the second coating, and
- a first phenol film 321 of the second coating comprising paper and phenolic resin; e.g. paper impregnated with phenolic resin, whereby
- the second phenol film 323 of the second coating is arranged closer to the plywood panel 200 or the preform 205 for the plywood panel than the first phenol film 321 of the second coating and
- the first glass fibre layer 322 of the second coating is left in between the first phenol film 321 of the second coating and the second phenol film 323 of the second coating.

In order to keep the manufacturing costs of the second coating 320 relatively low, in an embodiment of the fire resistant plywood panel 100, the first phenol film of the second coating 321 is attached directly to the first glass fibre layer of the second coating. Moreover, in an embodiment, the first phenol film of the second coating 321 is attached directly to the first glass fibre layer of the second coating 322 and the second phenol film of the second coating 323 is attached directly to the first glass fibre layer 323 of the second coating. Thus in an embodiment, the second coating 320 comprises only one glass fibre layer, i.e. the layer 322, and the two phenol films 321, 323.

In order to further increase the fire resistance of the fire resistant plywood panel 100, also from the second side, further layers can be arranged to the second coating 320. Referring to Fig. 2d, in an embodiment, the second coating 320 further comprises a second glass fibre layer of the second coating 324 and a third phenol film of the second coating 325. The second glass fibre layer of the second coating 324 is arranged in between the first phenol film of the second coating 321 and the second phenol film of the second coating 323, the third phenol film of the second coating 324 is arranged in between the first glass fibre layer of the second coating 322 and the second glass fibre layer of the second coating 324. Moreover, the layers (321, 322, 323, 324, 325) of the second coating 320 are attached to each other, optionally through other layers (in case the second coating 320 comprises also such other layers, not shown in the figures).

Correspondingly an embodiment of the manufacturing method for manufacturing a panel 100 with the second coating 320, the second coating 320 comprising the second glass fibre layer of the second coating 324 (see Fig. 2d), comprises (i) arranging on the second side of the plywood panel 200 or the preform 205 for plywood panel a second glass fibre layer of the second coating 324 in between the first phenol film of the second coating 321 and the second phenol film of the second coating 323 and (ii) arranging on the second side of the plywood panel 200 or the preform 205 for the plywood panel, a third phenol film of the second coating 325 in between the first glass fibre layer of the second coating 322 and the second glass fibre layer of the second coating 324. In this way, a preform 105 for the panel 100 is formed, the preform 105 comprising the two glass fibre layers of the second coating 320. The third phenol film of the second coating 325 comprises paper and phenolic resin. The third phenol film of the second coating 325 may have the same composition as the first phenol film of the second coating 321.

Glass fibre layers, even if increase the resistance against fire, also increase the cost of the panel. Thus, preferably the second coating 320 comprises at most two glass fibre layers (322, 324).

It has also been found that the properties of the plywood part 200 affect the fire resistance of the fire resistant plywood panel 100. Moreover, the properties of the plywood part 200 affect the mechanical properties, such as strength, the fire resistant plywood panel 100. Since such a panel may be used as a flooring element, also sufficiently good mechanical properties are important. Still further, sufficiently good mechanical properties are required for the long term fire resistance of the panel 100. For example, if the fire resistant panel 100 is exposed to repeated bending and straightening during its use, the layers of the coating 310 may disintegrate to some extent, which reduces the long term fire resistance. Therefore, the mechanical properties have an impact of the fire resistance; at least the long term fire resistance.

Wood is quite commonly classified as hardwood or softwood. Hardwood is wood from angiosperm trees or from monocotyledons. The list of angiosperm trees (hardwood) is wide, and includes e.g. alder, apple, aspen, birch, cherry, ebony, elm, eucalyptus, hickory, mahogany, maple, oak, rosewood, teak, walnut, and willow. The list of monocotyledons (hardwood) is less wide, including bamboo and coconut. In contrast, softwood comes from Gymnosperm trees, also called conifers. Examples of softwood include cedar, pine, and spruce.

As for the fire resistance, it has surprisingly been found that panels made from hardwood are more fire resistant than panels made of softwood. This effect may be related to the density of the wood material. For example, denser wood conducts heat better than light wood. Therefore, when heated from surface, the denser wood conducts heat into the panel thus preventing surface of the panel 100 from thermal degradation and further gas ignition. Moreover, denser panel has larger heat capacity, in terms of J/m³, whereby more heat can be absorbed by a dense panel. The issues related to thermal conductivity are specifically related to at least the first 210 or second 250 surface veneer layer to which the coating 310 or second coating 320 is attached, but also to other veneer layers. The issues related to heat capacity are related to at least the first 210 or second 250 surface veneer layer, and may be related also to other veneer layers of the fire resistant plywood panel 100.

In an embodiment, the first surface veneer layer 210 comprises hardwood. In an embodiment, also the second surface veneer layer 250 comprises hardwood. In an embodiment, also the second surface veneer layer 250 comprises hardwood and the panel 100 comprises the second coating 320. In an embodiment, all veneer layers (210-250) comprise hardwood.

Preferably birch is used as the hardwood material. Birch has the preferred properties related to density and thermal conductivity, is commonly available, and is relatively cheap. In an embodiment, the first surface veneer layer 210 comprises birch. In an embodiment, also the second surface veneer layer 250 comprises birch. In an embodiment, also the second surface veneer layer 250 comprises birch and the panel 100 comprises the second coating 320. In an embodiment, all veneer layers (210-250) comprise birch.

In an embodiment, the surface layers of the plywood part 200 comprise dense wood. The density of the surface layers may be characterized e.g. by the density of a surface piece a the plywood part, which surface piece is detachable as a single piece, e.g. by drilling and sawing, from the plywood part 200, the surface piece comprising a part of the surface veneer layer 210, a part of the veneer layer 220 that is directly attached to the surface veneer layer, and a part of the subsequent veneer layer 230 that is directly attached to the aforementioned part, and the adhesive in between these layers, but wherein the surface piece does not comprise further veneer layers (240-250). E.g. the surface piece can be drilled from the fire resistant plywood panel 100, and the coating 310 and subsequent veneer layer can be removed by grinding. In an embodiment, the density of such a surface piece is at least 650 kg/m³. Preferably, the density of such a surface piece is at least 680 kg/m³. However, too heavy panels increase the fuel consumption, when used is vehicles. Therefore, in an embodiment, the density of such a surface piece is at most 760 kg/m³. Preferably, the density of such a surface piece is from 680 kg/m³ to 760 kg/m³.

This may apply also to a second surface piece comprising the second surface veneer layer 250 and two subsequent layers, especially when the panel 100 comprises the second coating 320.

As for the whole plywood part, the density of the plywood part 200 may be e.g. at least 630 kg/m³. Preferably the density of the plywood part 200 is at least 650 kg/m³.

It is noted that the density affects not only the thermal properties (conductivity and/or heat capacity), but also the mechanical properties, such as strength. However, especially in vehicles, the maximum strength is not necessarily desired. In contrast, for optimal fuel consumption, both the strength and the weight should be optimized simultaneously; the weight being preferably low. It has been found that a reasonable compromise is achieved, when the density of the plywood part 200 of the fire resistant plywood panel 100 is from 630 kg/m³ to 740 kg/m³, preferably from 650 kg/m³ to 740 kg/m³, preferably

The mechanical properties of the panel 100 can be optimized also by the mutual orientation of the veneer layers 210, 220, 230, 240, 250. With reference to Fic. 3a, a veneer layer 230 comprises at least one veneer 231. The layer may comprise more than one veneers, such as three veneers 231, 232, 233, arranged next to each other in the direction of the widths and/or the length of the plywood part 200. Each veneer 231, 232, 233 is made from wood. Thus each veneer defines a grain orientation 239. A plywood panel is manufactured in such a way that all the veneers 231, 232, 233 of a veneer layer 230 are oriented in substantially the same direction. This means that all the veneers 231, 232, 233 of a veneer layer 230 have substantially the same grain orientation.

The coating 310 as discussed above is planar isotropic; however, the properties in direction of the surface normal can be very different. Thus, the coating 310, if it was a separate object, would swell because of moisture intake in all directions of the plane of the coating substantially similar. In contrast, a veneer 231 is anisotropic, since wood is known to have different properties in the grain orientation, the radial direction (which is perpendicular to the grain orientation and directed from the center of the log outwards), and the tangential direction (which is perpendicular to both the grain orientation and the radial direction). Therefore, each individual veneer layer is also anisotropic. The plywood part 200 as a whole, or parts thereof, can be made planar isotropic (or at least more isotropic) by arranging the neighbouring veneer layers in such a way that the grain orientations therein are perpendicular (see Fig. 3b).

It has been found that in particular the surface of the plywood part that is coated with coating 310 (optionally also the second coating 320), should preferably be planar isotropic, because the coating 310 also is isotropic. Thus, moisture induced swelling and heat induced expansion results in less interfacial thermal stress in comparison with the case wherein isotropic coating would be applied onto anisotropic plywood part 200. Thus, preferably at least the surface of the plywood part is made, at least to some extent, planar isotropic. More specifically, and referring to Figs. 3a- 3c, in an embodiment, the first surface veneer layer 210 comprises a veneer or veneers having a first grain orientation 219 and the first surface veneer layer 210 is directly attached to a second veneer layer 220 (which, if the plywood part 200 comprises only two veneer layers, is the second surface veneer layer). "Directly attached" means here that the second veneer layer 220 is arranged so that no other veneer layer (230, 240, 250) is left in between the first surface veneer layer 210 and the second veneer layer 220. Also the second veneer layer 220 comprises a veneer or veneers, which define a second grain orientation 229. To make the surface of the plywood part 200 planar isotropic, the second veneer layer 220 is arranged in relation to the first surface veneer layer 210 in such a way that the angle between the first grain orientation 219 and the second grain orientation 229 is at least 60 degrees; preferably at least 85 degrees. The angle may be a right angle (90 degrees). In Figs 3a, 4b-4d, and 5a-5c, a grain orientation that is in the plane of the figure is depicted by a two-headed arrow "↔"; while a grain orientation that is directed parallel to the surface normal of the figure is depicted with cross marks "×". As the surface veneer 210 layer in this embodiment is attached to a veneer layer that is oriented in significantly different direction, the surface becomes reasonably isotropic in its plane, and the local thermal stress between the coating 310 and the surface veneer layer 210 can be reduced. This also improves the long term fire resistance, because the interface between the coating 310 and the plywood part 200 does not significantly fatigue. Fatigues could be the result of variable moisture and/or temperature, and the resulting swelling or expansion.

The degree of isotropy can be increase also be thermally and/or chemically treating the veneers of the plywood part 200, in particular the veneers of the surface layer 210. Thermal and chemical treatment has been discussed above. In an embodiment, the first surface veneer layer 210 comprises thermally or chemically treated veneers.

However, when the grain orientations of the neighboring veneer layers, in particular near the surface veneer layer 210, are oriented substantially perpendicularly with respect to each other, as discussed above, sufficient planar isotropy can be obtained also without thermal or chemical treatment of the veneers. This reduces the risk for cracking the coating 310 due to swelling or expansion. Conversely this increases the fire resistance of the panel, as heating evidently implies thermal expansion. Moreover, this increases the long term fire resistance of the panel, as cycling moisture swelling and/or mechanical load may occur during the use of the panel. In an embodiment, the first surface veneer layer 210 does not comprise thermally treated veneers. In an embodiment, the first surface veneer layer 210 does not comprise chemically treated veneers. In an embodiment, the first surface veneer layer 210 comprises neither thermally nor chemically treated veneers.

Also the other surface of the plywood part can be made more isotropic by same type of structure. With reference to Figs. 3a-3d, a plywood part 200 may comprise only three layers. In this case, the veneer layer 230 is the second surface veneer layer. In the corresponding embodiment, the second surface veneer layer 230 comprises a veneer or veneers having a third grain orientation 239 and the second surface veneer layer 230 is attached to the second veneer layer 220 or to another veneer layer. E.g. in Fig. 1, the second surface veneer layer is attached to the veneer layer 240. Moreover, in case the plywood part comprises only two layers, the second surface veneer layer (which logically could be referred to as 220) is directly attached to the first surface veneer layer 210. Moreover, the second veneer layer 220 or the other veneer layer is arranged so that no other veneer layer is left in between (i) the second surface veneer layer 230 and (ii) the second veneer layer 220 or the other veneer layer, whichever the second surface veneer layer 230 is directly attached to. Still further, the second veneer layer 220 or the other veneer layer comprises a veneer or veneers having a fourth grain orientation 229. To improve isotropy, the second veneer layer 220 or the other veneer layer is arranged in relation to the second surface veneer layer 230 in such a way that the angle between the third grain 239 orientation and the fourth grain orientation 229 is at least 60 degrees; preferably at least 85 degrees. The angle may be a right angle (90 degrees).

This isotropy of the plywood part 200 near the second surface veneer layer 230, 250 is preferred in particular when the panel 100 comprises the second coating 320; for the same reasons as discussed for the coating 310.

Moreover, as depicted in Fig. 3b and 1, in an embodiment, the first grain orientation 219 is parallel to the third grain orientation 239. With this mutual orientation, and when the panel comprises both the coatings 310, 320, the panel can be used equally well both upside up and upside down. Thus, this helps the construction work, since the panel can be applied in either direction. Preferably in this case also the second coating 320 comprises as many glass fibre layers as the first coating 310. The structure of the second coating 320 may be identical to the structure of the first coating 310.

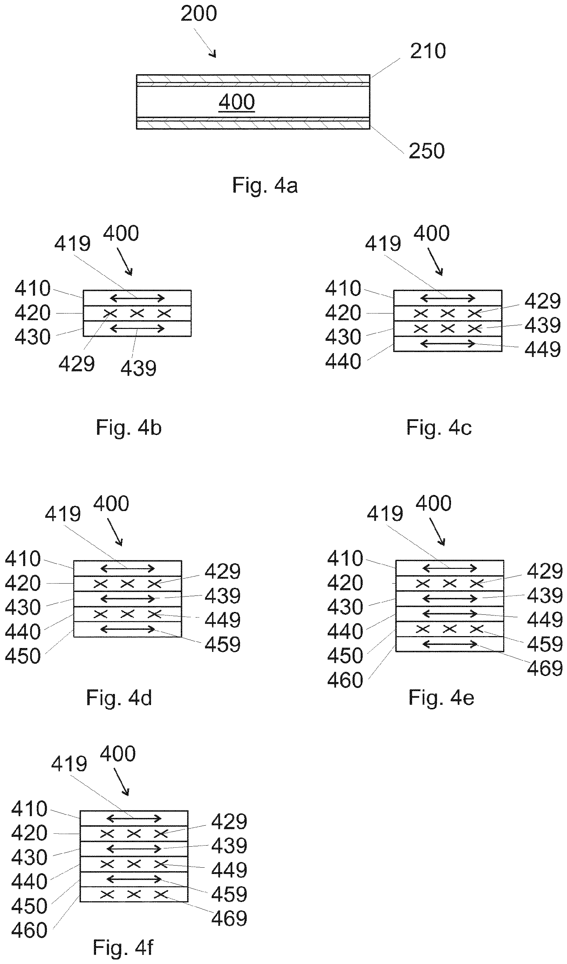

The mechanical properties of the plywood part can be engineered according to purpose by the mutual orientation of also other neighboring veneer layers. For the following discussion it is noted that the plywood part 200 may comprise an odd number of veneer layers. An odd number is 2N+1, wherein N is an integer. In plywood, N is at least one. Alternatively, the plywood part 200 may comprise an even number of veneer layers. An even number is 2N, wherein N is an integer. In plywood, N is at least two. For further discussion, the plywood part comprises one or two middle veneer layers as follows:
- Provided that the number of veneer layers in the plywood part 200 is odd, the plywood part comprises only one middle veneer layer such that N veneer layers are left on both sides of the middle veneer layer. For example, the plywood part 200 of Fig. 1 comprises five = 2N+1, wherein N=2, veneer layers. Only the layer 230 is a middle veneer layer having N=2 veneer layers on both sides.
- Provided that the number of veneer layers in the plywood part 200 is even, the plywood part comprises only two middle veneer layers such that N veneer layers are left on a first side of a middle veneer layer and N-1 veneer layers are left on an opposite second side of a middle veneer layer. For example, if the core 400 of Fig. 4e constitutes a plywood part, the plywood part 200 comprises six = 2N, wherein N=3, veneer layers. Both the veneer layers 430 and 440 comprise N=3 veneer layers on one side and N-1=2 veneer layers on the opposite side.

In addition to veneer layers, the plywood part comprises adhesive, and may comprise other layers, as will be discussed.

In some cases it is preferable to use as isotropic fire resistant plywood panels 100 as possible. In the plywood part of such a panel 100, the grain orientation of each veneer layer forms an angle of at least 60 degrees, preferably at least 85 degrees, with the grain orientation of such a veneer layer that is next to that veneer layer and that is not a middle veneer layer. In this way, the plywood part 200 is isotropic.

A plywood part 200 may comprise or consist of a core 400. For example, the plywood part 200 of Fig. 4a comprises a core 400 and two surface veneer layers. The core 400 comprises veneer layers and adhesive 295 in between the layers (see Fig. 1). Figures 4b-4f show cores 400 of some plywood parts. A plywood part consisting of only such a core would be isotropic in the aforementioned sense. Note, that the middle layers, when the number of veneer layers is even, can be oriented in the same direction.

However, for some applications, an oriented plywood panel 100 may suit better. By orienting the panel, its mechanical properties can be optimized. For example, the bendability (related to stiffness) of a panel 100 can be optimized. Moreover, a stiff panel may fatigue less than a flexible panel. Thus, the fire resistance of a panel 100 of which stiffness is optimized for use, may have a better long term fire resistance.

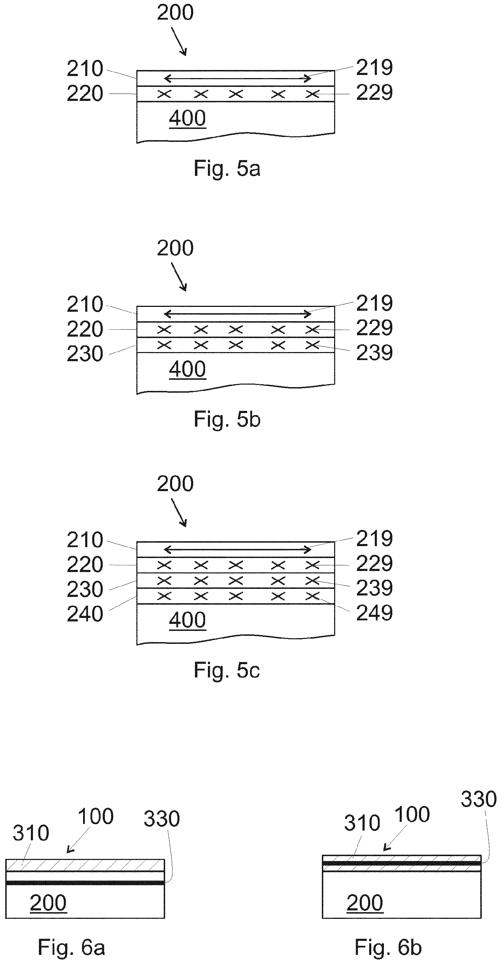

It has been found that a veneer layer 220 is easily bendable around an axis that is parallel to the grain orientation 229; however, it is not as easily bent around an axis that is e.g. perpendicular to the grain orientation 229. To increase bendability in one direction (and, correspondingly decrease bendability in another direction), the plywood part 200 can be oriented. In a corresponding embodiment, and with reference to Figs. 5b and 5c, the plywood part 200 comprises at least two veneer layers 220, 230 that are next to each other in such a way that no other veneer layer is left in between these two veneer layers, and which, provided that the number of veneer layers of the plywood part is even, are not the middle veneer layers; in such a way that the angle between the grain orientations of these two veneer layers 220, 230 is at most 40 degrees, preferably at most 5 degrees. The grain orientations of these two veneer layers 220, 230 can be parallel. In this way, the mutual orientation of these layers 220, 230 makes the plywood part 200 oriented. As a result, the stiffness against bending around a specific axis is increased, which may give rise to less fatigue and better long term fire resistance.

As an example, suppose that the plywood parts 200 of Figs. 5a and 5b are identical except for the orientation of the veneer layer 230. Because of the mutual orientation of the veneer layers 220 and 230, the plywood part of Fig. 5b is more easily bendable around an axis parallel to the grain orientation of the veneer layer 220 than the plywood part of Fig. 5a. Moreover, suppose that the plywood parts 200 of Figs. 5b and 5c are identical except for the orientation of the veneer layer 240. Because of the mutual orientation of the veneer layers 230 and 240, the plywood part of Fig. 5c is more easily bendable around an axis parallel to the grain orientation of the veneer layer 230 than the plywood part of Fig. 5b.

In addition or alternatively to the aforementioned orienting veneer layers, the mechanical properties of the plywood part 200 can be engineered to comply with intended use by the properties of a core 400 of the plywood part 200. Figures 4a-4f depict the core 400 of some embodiments of the plywood part 200. The core 400 refers to two veneer layers of the plywood part 200 and all layers in between these two veneer layers. Moreover, the core 400 comprises the middle veneer layer or middle veneer layers as defined above. However, the core 400 further comprises other veneer layers. Thus, a core 400 may constitute the whole plywood part 200. Thus, a core 400 may constitute only a part of the plywood part 200. In an embodiment, the plywood part 200 comprises a core 200, the core comprising
- provided that the number of veneer layers in the plywood part is odd and at least three,
   ∘ the middle veneer layer (e.g. 420 in Fig. 4b),
   ∘ a first subsequent veneer layer (e.g. 410) that is directly attached to a first side of the middle veneer layer (e.g. 420), and
   ∘ a second subsequent veneer layer (e.g. 430) that is directly attached to the other side of the middle veneer layer (e.g. 420) and
- provided that the number of veneer layers in the plywood part is even and at least four,
   ∘ two middle veneer layers (e.g. 420 and 430 in Fig. 4c), i.e. a first middle veneer layer 420 and a second middle veneer layer 430,
   ∘ a first subsequent veneer layer (e.g. 410) that is directly attached to the first middle veneer layer (e.g. 420), wherein the first middle veneer layer (e.g. 420) remains in between the second middle veneer layer (e.g. 430) and the first subsequent veneer layer (e.g. 410), and
   ∘ a second subsequent veneer layer (e.g. 440) that is directly attached to the second middle veneer layer (e.g. 430), wherein the second middle veneer layer remains (e.g. 430) in between the first middle veneer layer (e.g. 420) and the second subsequent veneer layer (e.g. 440).

In an embodiment, in the core 400; the grain orientation the first subsequent veneer layer (e.g. 410) forms an angle of at least 60 degrees, preferably at least 85 degrees, with the grain orientation of the middle veneer layer to which it is directly attached (e.g. 420); and the grain orientation the second subsequent veneer layer (e.g. 430; 440) forms an angle of at least 60 degrees, preferably at least 85 degrees, with the grain orientation of the middle veneer layer to which it is directly attached (e.g. 420; 430, respectively). As depicted in Figs. 4b-4e these angles may be right angles. Here "directly attached" means that no veneer layer is left in between the directly attached layer.

With reference to Figs. 4e and 4f, when the number N of the veneer layer of the plywood part 200 is even, the two middle layers may have parallel grain orientations (as in Figs. 4e and 4c), or they may be oriented perpendicularly (as in Fig. 4f). Preferably the two surface veneer layers are oriented in the same direction, whereby, when the number N of veneer layers is even and the plywood part it not oriented, the middle veneer layers are oriented parallel to each other, as in Fig. 4e. However, an isotropic panel is obtained also with the structure of Fig. 4f.

In an embodiment, all the veneer layers of the core 400 are made from the same type of wood. When all the veneers of the core are made from the same type of wood, all the veneer layers of the core behave similarly in the manufacturing process. Thus, the behavior, such as compression, during manufacturing is more uniform, which simplifies the manufacturing process. Moreover, the material variety is reduced, whereby a less storage capacity is required at the manufacturing site. Still further, moisture induced swelling of such a panel is more uniform. In an embodiment, all the veneer layers of the core 400 are made from hardwood. This has the effect that the core is mechanically strong, conducts heat well, and has a relatively high heat capacity. In an embodiment, all the veneer layers of the core are made from birch. In addition to the aforementioned effect, birch is relatively cheap, whereby a panel 100 can be manufactured cost-effectively.

Still further, it has been noticed that softwood, in particular birch, has excellent resistance against cleavage. In case the veneer layers cleave, e.g. due to uneven swelling, the broken veneers may also break the costing, or form micro cracks therein. These micro cracks increase the permeability of the coating for gases, thereby reducing the fire resistance.

In an embodiment, all the veneer layers of the core are made from softwood. Typically softwood has lower density than hardwood, whereby the strength in relation to weight can be improved.

In an embodiment, the core 400 is reflection symmetric about the plane that is parallel to the veneer layers of the core and includes the center of the core. This has the effect that under mechanical load, the stress concentrates in the core irrespective of whether the panel 100 is placed upside up or upside down. Thus this provides for flexibility for construction.

In an embodiment, for each veneer layer of the core 400, the angle between the grain orientation of that veneer layer and the grain orientation of the veneer layer to which that veneer layer is directly attached and which is not a middle veneer layer is at least 60 degrees, preferably at least 85 degrees. The angle may be a right angle. Such cores are depicted in Figs. 4b-4d. The number of veneer layers in such a core may be e.g. at least 5, at least 6, or at least 7.

In an embodiment, the thickness of a veneer layer of the plywood part 200 is from 0.5 mm to 4 mm. In an embodiment, the thickness of each veneer layer of the plywood part 200 is from 0.5 mm to 4 mm. In an embodiment, the thickness of a veneer layer of the plywood part 200 is from 1 mm to 3.5 mm. In an embodiment, the thickness of the first surface veneer layer of the plywood part 200 is from 1 mm to 3.5 mm. In an embodiment, the thickness of each veneer layer of the plywood part 200 is from 1 mm to 3.5 mm. In an embodiment, the thickness of a veneer layer of the plywood part 200 is from 1.3 mm to 3.0 mm. In an embodiment, the thickness of the first surface veneer layer of the plywood part 200 is from 1.3 mm to 3.0 mm. In an embodiment, the thickness of each veneer layer of the plywood part 200 is from 1.3 mm to 3.0 mm. What has been said about the first surface veneer layer 210 equally applies to the second surface veneer layer, in particular when the panel 100 comprises the second coating 320.

In an embodiment, the first surface veneer layer is made from hardwood, such as birch, and the thickness of the first surface veneer layer of the plywood part 200 is from 1 mm to 2 mm. In an embodiment, the first surface veneer layer is made from hardwood, such as birch, and the thickness of the first surface veneer layer of the plywood part 200 is 1.5 mm. This selection of material in connection with the thickness has been found to provide for good resistance against fire. What has been said about the first surface veneer layer 210 equally applies to the second surface veneer layer, in particular when the panel 100 comprises the second coating 320.

In an embodiment, the number of veneer layers in the plywood part 200 is odd (for definition, see above). In an embodiment, the number of veneer layers is from 3 to 25, such as from 5 to 21, preferably from 9 to 15.

It has been observed that the adhesive 295 (Fig. 1) of the plywood part 200 also affects the fire resistance of the panel 100. In this respect, it has been found that an adhesive 295 comprising phenol formaldehyde resin suits very well for a fire resistant plywood panel 100. Furthermore, phenol formaldehyde resin is also moisture resistant, whereby, even if e.g. the surface veneer layer becomes moist, the phenolic resin keeps the veneer layers attached to each other and prevents the propagation of moisture to other layers. For these reasons, in an embodiment, the adhesive 295 in between the veneer layers of the plywood part 200 comprises phenolic resin.

A veneer layer may be or may have been manufactured by one of rotary cutting, flat slicing, quarter slicing, half-round slicing, rift cutting, and sawing. These methods are known as such in plywood manufacturing, and different methods result in a slightly different visual appearance of the layer. Rotary cutting may also be referred to as rotary peeling, turning, or rotary turning.

It has been found that the adhesive 295 adheres well on veneers manufactured by rotary cutting. This may be due to micro cracks of the veneers that suck adhesive therein. This has been found in particular in connection with phenolic resin adhesive. Thus, in an embodiment, a veneer of a veneer layer has been manufactured by rotary cutting. In an embodiment, all the veneers of the first surface veneer layers 210 (and optionally the veneers of the second surface veneer layer 250) have been manufactured by rotary cutting. In an embodiment, all the veneers of all veneer layers have been manufactured by rotary cutting. In addition to adhesive properties, rotary cutting results in veneers that have an advantageous thickness and reasonably large size.

The features of the fire resistant plywood panel 100 can be selected according to needs. In particular, for use in a flooring, both the strength and the weight should be within tolerable limits. It has been found that for many applications a panel 100 having a thickness of from 7 mm to 30 mm provides for sufficient strength and sufficiently light weights. In many applications, a thickness from 10 mm to 25 mm, such as 12 mm suffices.

In a specific embodiment, the thickness of the fire resistant plywood panel 100 is 12 mm, and the coating 310 comprises the first and the second glass fibre layers (312, 314). This panel provides for very good resistance against heat and moisture from the first side, and good strength.

In another specific embodiment, the thickness of the fire resistant panel 100 is 12 mm, the coating 310 comprises the first and the second glass fibre layers (312, 314), the panel 100 comprises the second coating 320, and the second coating 320 comprises the first glass fibre layer of the second coating 322 and the second glass fibre layer of the second coating 324. This panel provides for very good resistance against heat and moisture from both sides, and reasonable strength.

In an embodiment, the thickness of the panel is from 15 mm to 21 mm.

In yet another specific embodiment, the thickness of the fire resistant plywood panel 100 is from 15 mm to 21 mm; the coating 310 comprises only one glass fibre layer 312 and the two phenol films 311, 313; the panel 100 comprises the second coating 320; and the second coating 320 comprises only one glass fibre layer 322 and the two phenol films 321, 323. This panel provides for good resistance against heat and moisture from both sides, and very good strength.

In principle, resistance against fire could be improved using flame retardants. Flame retardants typically comprise minerals, or phosphorus, boron, nitrogen, silica, or organophosphorous compounds. The flame retardants typically affect the adhesive properties of the adhesive of the plywood part 200 and/or the coating 310. Moreover, in humid environments, such as outside, the fire retardants may form salts that dry on the surface of the panel 100. This results in poor visual appearance. Still further, these salts may enhance corrosion of a vehicle to which the panel is attached. Because of the protective surface, flame retardants are not needed. An embodiment of the fire resistant plywood panel 100 is free from flame retardants. In an embodiment, the plywood part 200 is free from flame retardants. In an embodiment, the coating 310 is free from flame retardants. An embodiment of the fire resistant plywood panel 100 comprises at most 0.1 wt-% flame retardants.

Such a panel 100 may be used in a vehicle. Thus, a vehicle may comprise such a fire resistant plywood panel 100. In particular, the panel 100 may be used in the flooring of a vehicle. Correspondingly, a vehicle comprises a floor comprising the fire resistant plywood panel 100. The panel 100 may be further coated e.g. by a floor mat. In an embodiment, a floor mat is attached to protective surface 350 (Fig. 1) of the first phenol film 311 of the fire resistant plywood panel 100. The floor mat limits the interior of the vehicle.

One problem related to floorings is their soundproofing. The veneer layers 210-250 of the plywood part are reasonably hard, as is the adhesive 295, at least phenolic adhesive, in between these layers. It has been found, that the absorption of sound can be improved by arranging a soundproofing layer 330 in said fire resistant plywood panel 100. Referring to Figs. 6a and 6b, an embodiment of the panel 100 comprises a soundproofing layer 330. The soundproofing layer 330 may comprise elastomer. An embodiment of the panel 100 comprises a layer of cork as the soundproofing layer 330. An embodiment of the panel 100 comprises a rubber layer 330 as the soundproofing layer 330, the rubber layer preferably is made from heavy rubber. An embodiment of the panel 100 comprises a soundproofing layer 330 in between two veneer layers of the plywood part (Fig. 6a). An embodiment of the panel 100 comprises a soundproofing layer 330 in the coating 310 of panel 100 (Figs. 6b).. A rubber layer may be vulcanized to its place, thus no separate adhesive is necessary. Rubber used for soundproofing may have the specific weight of from 7 to 9 kg/m². Regardless of the material, the thickness of the soundproofing layer may be from 1 mm to 6 mm, such as from 2 mm to 4 mm. A soundproofing layer 330 may comprise multiple thinner layers of material suitable for soundproofing.

Preferably the soundproofing layer 330 is made of soft material, since soft materials absorbs sound waves. In an embodiment, the shore hardness of the soundproofing layer 330 is at most 100 (as measured with type "A" durometer). However, too soft a soundproofing layer may make the panel 100 mechanically unreliable. Thus, in an embodiment, the shore hardness of the soundproofing layer 330 is at least 25 (as measured with type "A" durometer).

This "softness" can alternatively or in addition be characterized by the modulus of elasticity. In an embodiment, the modulus of elasticity of the soundproofing layer 330 is at most 4×10⁸ N/m² at the temperature 20 °C. The modulus of elasticity of the soundproofing layer 330 may be at least 5×10⁶ N/m² at the temperature 20 °C.

Moreover, the damping effect of the soundproofing layer 330 can be characterized by its loss factor. In an embodiment, the loss factor of the soundproofing layer 330 is at least 0.8 at the temperature 20 °C for the frequency 1 kHz. The loss factor of the soundproofing layer 330 may be at most 2.5 at the temperature 20 °C for the frequency 1 kHz.

The plywood part 200 itself also damps acoustic vibrations to some extent. Thus, sufficient soundproofing may also be achieved, provided that panel 100 comprises a sufficient amount of material for sound damping. It has been found that as a function of specific weight of the panel 100, its capability of damping sound having the frequency 1 kHz first increases rapidly for a light panel. Moreover, for heavier panels, the capability of damping sound increases more slowly as function of specific weight. Moreover, it has been observed that the transition from fast-increasing damping to slowly-increasing damping occurs at around the specific weight 5-10 kg/m². In this respect, the specific weight of the fire resistant plywood panel 100 may be at least 5 kg/m², preferably at least 10 kg/m². However, in vehicles, heavy panels should be avoided for fuel reduced consumption. Thus, the specific weight of the fire resistant plywood panel 100 may be at most 30 kg/m², preferably at most 25 kg/m². Thus, the specific weight may be e.g. from 5 kg/m² to 30 kg/m², such as from 10 kg/m² to 25 kg/m².

### Experimental

Experiments for fire resistance were carried out as discussed in the standards DIN 54837 and DIN 5510, part 2 (reference is made to the latest versions on 15.5.2014). A fire resistant plywood panel 100 as generally described above, and will be detailed below, was tested according to the standard.

In the experiments, the coating 310 consisted of the two phenol films 311 and 313, and the first glass fibre layer 312. The phenol films 311, 313 had a specific weight of 120 g/m², wherein the paper of the phenol film constituted 40 g/m² of the specific weight. The first glass fibre layer 312 comprised non-woven glass fibres. The specific weight of the first glass fibre layer 312 was 35 g/m², wherein the glass fibre core 312b (Fig. 3e) constituted about 27 g/m² of the specific weight, and both binder layers 312a, 312c (Fig. 2e) constituted each 4 g/m² of the specific weight. The thickness of the plywood part 200 was 15 mm. All the veneers of the plywood part 200 were made of birch. In addition to the coating 310, a similar second coating 320 was applied on the other side of the plywood part 200; however fire resistance was tested from one side only. These panels are referred to as samples of types A, B, and C in Table 1.

For comparative reasons, also panel with a coating not having the first glass fibre layer was tested. Panels not having the first glass fibre layer are referred to as samples of types D and E in Table 1.

Four panel samples for each sample type of sample was tested. The setup and results are summarized in Table 1. Only the average result from the four types of samples is reported.

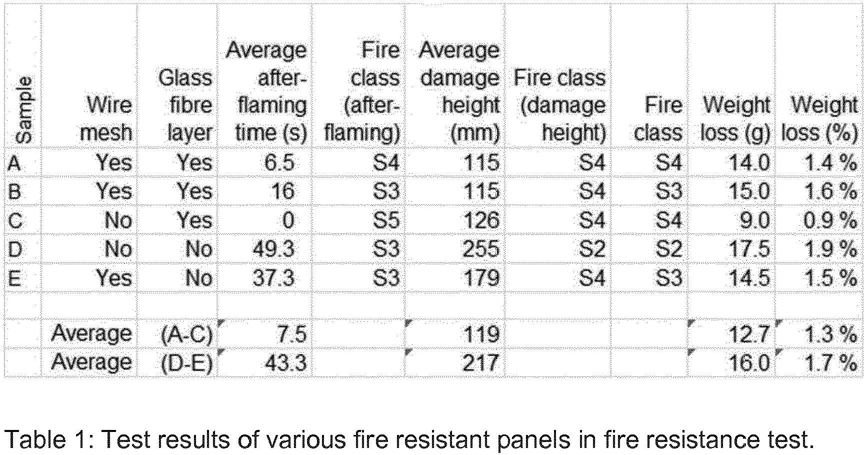

Sample A was manufactured by coating a plywood panel in such a way that during the pressing a wire mesh 512 remained in between the smooth pressing surface 510 and the first phenol film 311 (see Fig. 7c). In comparison to samples B, in samples A an additional object 514 was placed in between the wire mesh 512 and the phenol film 311 to smoothen the pressing part 517 of the effective pressing surface 515.

Sample B was manufactured by coating a plywood panel in such a way that during the pressing only a wire mesh 512 remained in between the smooth pressing surface 510 and the first phenol film 311 (see Fig. 7c). As for the detailed structure of the wire mesh 512, the wire mesh 512 was such that the texture of Fig. 11d was pressed onto the protective surface 350. The penetrating patterns 610 seen in the Fig. 11d have a projection to the plane of the effective pressing surface, which projection has the size of about 2 mm × 1 mm.

Sample C was manufactured by coating a plywood panel in such a way that during the pressing no object remained in between the smooth pressing surface 510 and the first phenol film 311 (see Fig. 7b). The smooth protective surface 350 is depicted in Fig. 11a.

Samples D and E are for comparative purposes and did not comprise the glass fibre layer. In the samples D, no object remained in between the phenol film 311 and the surface 510. In the samples E, a wire mesh was placed in between the phenol film 311 and the surface 510.

From the results it is obvious that the first glass fibre layer 312 reduces the afterflaming time, the height of the damaged area, and the amount of lost material. For details, see Table 1. Thus, the glass fibre layer significantly improves the fire resistance.

Interestingly, if and when the first glass fibre layer 312 is used, the results (A-C of table 1) indicate that a best panel 100, in terms of fire resistance, can be obtained by coating the plywood panel by pressing the coating layers with a smooth pressing surface 510. The authors believe that the results improve, because the phenol of the phenol films 311, 313 cannot locally boil when a smooth pressing surface 510 is applied. As the phenol of the films 311, 313 does not boil, the phenol of the coating 310 remains smooth, and as discussed above, the permeability of the coating decreases. Thus, the volatiles evaporated from the plywood part 200 of the panel 100 cannot penetrate the coating, whereby the afterflaming time is significantly reduced.

As indicated by samples A and B, the afterflaming time of a panel 100, manufactured with an effective pressing surface 515 comprising a rough pressing part 517, is at least 6.5 s. As indicated by the sample C, afterflaming was not observed for a panel 100 manufactured with an effective pressing surface 515 having a smooth pressing part 517. It is assumed that the roughness of the pressing surface affects the afterflaming time, as discussed above. In an embodiment, the afterflaming time of the panel 100, according to the standard DIN 5510 part 2, is at most 5 s, preferably at most 3 s, and more preferably at most 1 s.

Moreover, even if not shown in the Table 1, the coated panel is also weather resistant. In particular it was observed that the fire resistant plywood panel 100 in these tests was weather resistant according to the standard EN 314-2, class 3 (reference is made to the newest version on 15.5.2014).

Similar types of samples were exposed to water absorption test. Results for these sample types L-N are given in Table 2. Three samples of each type were tested. In particular, the coating 310 of in the samples of types L and M had the same structure with the same specific weights of the layers, as the samples of types A-C (see above). Furthermore, the samples "L" were pressed with a similar effective pressing surface as the samples "B". The samples "M" were pressed with a similar effective pressing surface as the samples "C". Moreover, in samples "N" and "D" no glass fibre layer was used, but a similar effective pressing surface was used. The tests were carries out in similar way, as described in the standard SFS-EN 20535 (reference is made to the version dated 1994). The related COBB -test is described in the standard ISO 535 (reference is made to the 1991 version ISO535:1991). However, according to the standard, the samples should be pre-conditioned in laboratory conditions for a week (7 days) before exposing to water absorption tests. Only a part of the samples were pre-conditioned before the water absorption tests, while a part of the samples were pre-conditioned according to the standard. In the COBB -test, the sample is exposed to distilled water from one side. In the present tests, the panel 100 was exposed to the distilled water of the COBB - test from the side of the coating 310. The results are summarized in Table 2. In Table 2, each measurement result for a type is the average of three samples.

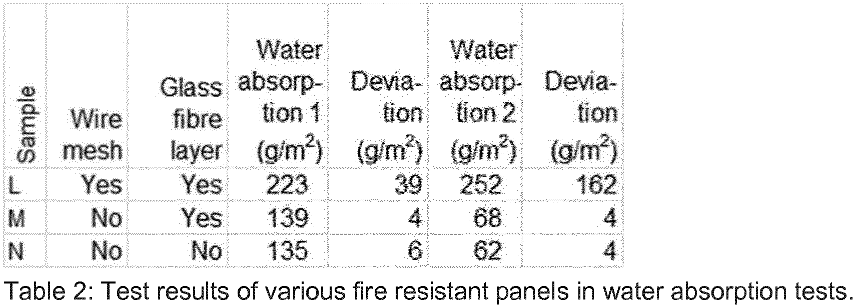

In Table 2, the column "water absorption 1" lists the results for those samples that were not pre-conditioned. In Table 2, the column "water absorption 2" lists the results for those samples that were pre-conditioned. Thus, the results of the columns "water absorption 2" are the results according to standard SFS-EN 20535 (see above).

Samples L were manufactured by coating a plywood panel in such a way that during the pressing a wire mesh 512 remained in between the smooth pressing surface 510 and the first phenol film 311 (see Fig. 7c).

Samples M were manufactured by coating a plywood panel in such a way that during the pressing no object remained in between the smooth pressing surface 510 and the first phenol film 311 (see Fig. 7c).

Samples N serve only a comparative purpose; these samples do not include the glass firbre layer 312.

Based on Table 2, samples M and N, it seems that the glass fibre layer 312 does not affect the water absorption. However, as seen from Table 1, the glass fibre layer affects the fire resistance.

Based on Table 2 it seems that the use of a wire mesh 512, which results in a rough effective pressing surface 515, while pressing the preform 105 for the fire resistant plywood panel, has an effect on water absorption. Clearly, a smooth pressing surface 510 (or effective pressing surface 515) results in a coating 310 that makes the panel 100 more weather resistant (i.e. to have a lower water absorption). Conversely, a rough effective pressing surface 515 gives rise to high water absorption. It is assumed that this is the result of the boiling of the phenolic resin during pressing, which induces holes and/or flow paths into the coating 310, thereby increasing the water absorption thereof. As evident, high water absorption also implies that the coating is more permeably to the volatile gases expelled from the plywood part 200 in hot conditions, whereby such a high water absorption also implies low fire resistance.

As the column "water absorption 2" corresponds to measurement results according to the standard SFS-EN 20535 (1994), in an embodiment, the water permeability of the fire resistant plywood panel 100, measured from the side of the coating 310 and as detailed in the standard SFS-EN 20535 (1994), is at most 150 g/m². In an embodiment, this water permeability is at most 100 g/m². In an embodiment, this water permeability is at most 75 g/m². Specific values are given in Table 2.

## Claims

1. A method for manufacturing a fire resistant plywood panel, the method comprising
- arranging available
• a plywood panel comprising at least three veneer layers, each veneer layer comprising at least one wooden veneer and adhesive in between the veneer layers, wherein the veneer layers are arranged with respect to each other in the direction of a thickness of the plywood panel or
• a preform for a plywood panel comprising at least three veneer layers by stacking the veneers or veneer layers onto each other in the direction of a thickness of the preform for the plywood panel,
- arranging on a first side of the plywood panel or the preform for a plywood panel
• a second phenol film comprising paper and phenol formaldehyde resin,
• a first glass fibre layer, and
• a first phenol film comprising paper and phenol formaldehyde resin, whereby
• the second phenol film is arranged closer to the plywood panel or the preform for the plywood panel than the first phenol film and
• the first glass fibre layer is left in between the first phenol film and the second phenol film, thereby forming a coating for the plywood panel or the preform for the plywood panel such that
• a direction of the thickness of the coating is parallel to the direction of the thickness of the plywood panel or the direction of the thickness of the preform for the plywood panel; thereby
- forming a preform for the fire resistant plywood panel, and
- pressing, at a first temperature, using a first pressure, for a first period of time, the preform for the fire resistant plywood panel to form the fire resistant plywood panel, in such a way that
• the first phenol film is pressed with a pressing part of a first effective pressing surface and
• (i) a constituent of the first phenol film or the second phenol film or (ii) a reaction product of the first phenol film or the second phenol film does not boil.

2. The method of claim 1, comprising
- arranging available a plywood panel, and coating the plywood panel by said
- arranging on a first side of the plywood panel
• a second phenol film comprising paper and phenol formaldehyde resin,
• a first glass fibre layer, and
• a first phenol film comprising paper and phenol formaldehyde resin, whereby
• the second phenol film is arranged closer to the plywood panel than the first phenol film and
• the first glass fibre layer is left in between the first phenol film and the second phenol film; thereby
- forming a preform for the fire resistant plywood panel, and
- pressing, at a first temperature, using a first pressure, and for a first period of time, the preform for the fire resistant plywood panel to form the fire resistant plywood panel, in such a way that the first phenol film is pressed with a pressing part of a first effective pressing surface.

3. The method of the claim 1 or 2, wherein
- the pressing part of the first effective pressing surface is free from such penetrating patterns that have a one-dimensional size of at most 5 mm; and
- optionally, the pressing part of the first effective pressing surface is free from such penetrating patterns that
• have a one-dimensional size of at least 5 mm, and
• comprise a protrusion, in such a way that
• the total area of the projection of the protrusions of the penetrating pattern to the plane of the effective pressing surface is more than 33 % of the area of the projection of the penetrating pattern to the plane of the effective pressing surface.

4. The method of any of the claims 1 to 3, wherein
- the pressing part of the first effective pressing surface is free from such penetrating patterns that
• have a one-dimensional size of at most 5 mm, and
• have a depth of at least 1 mm; preferably at least 0.5 mm and more preferably at least 0.2 mm.

5. The method of any of the claims 1 to 4, wherein
- the pressing part of the first effective pressing surface has an average surface roughness Ra that is less than 0.05 mm and/or
- the pressing part of the first effective pressing surface has a maximum surface roughness Rt that is less than 0.1 mm.

6. A fire resistant plywood panel, suitable for flooring of a vehicle, the fire resistant plywood panel comprising
- a plywood part having a first length, a first width, and a first thickness, the first length being greater than or equal to the first width and the first width being greater than or equal to the first thickness, and
- a coating attached to the plywood part, the coating having a second thickness of which direction is parallel to a direction of the first thickness, wherein
- the plywood part comprises
• at least three veneer layers arranged with respect to each other in the direction of the first thickness, each veneer layer comprising at least one wooden veneer and
• adhesive in between the veneer layers, whereby the plywood part comprises
• a first surface veneer layer, wherein all other veneer layers than the first surface veneer layer remain on the same side of the first surface veneer layer, and
• a second surface veneer layer, wherein all other veneer layers than the second surface veneer layer remain on the same side of the second surface veneer layer, and
- the coating comprises
• a first phenol film comprising paper and phenol formaldehyde resin,
• a second phenol film comprising paper and phenol formaldehyde resin, and
• a first glass fibre layer in between the first phenol film and the second phenol film, wherein
- the first phenol film is attached, optionally through other layers, to the first glass fibre layer,
- the second phenol film is attached to the first surface veneer layer of the plywood part, and
- the second phenol film is attached, optionally through other layers, to the first glass fibre layer, whereby
a protective surface of the first phenol film, which protective surface does not face the first glass fibre layer, is exposed to an environment for protecting the plywood part from heat and moisture of the environment, wherein
- the protective surface of the first phenol film is free from such solidified boiling droplets that comprise phenol formaldehyde resin and have a one-dimensional size from 0.1 µm to 500 µm.

7. The fire resistant plywood panel of claim 6, wherein
(a)
- the protective surface of the first phenol film is free from patterns, or (b)
- the protective surface of the first phenol film comprises a pattern; whereby the protective surface also comprises an outside area that is outside of the pattern,
- the average roughness of the protective surface at the pattern has a first roughness value Ra_{P},
- the average roughness of the protective surface at the outside area has second roughness value Ra_{S}, and
- the first and the second roughness values are approximately equal, i.e. 0.9 < Ra_{P}/Ra_{S} < 1.1.

8. The fire resistant plywood panel of the claim 6 or 7, wherein
- the protective surface of the first phenol film has an average surface roughness Ra that is less than 0.05 mm and/or
- the protective surface of the first phenol film has a maximum surface roughness Rt that is less than 0.1 mm.

9. The fire resistant plywood panel of any of the claims 6 to 8, wherein
- the coating comprises phenol formaldehyde resin from 30-wt% to 80-wt%; preferably from 40-wt% to 60-wt%.

10. The fire resistant plywood panel of any of the claims 6 to 9, wherein
- the first glass fibre layer comprises non-woven glass fibres.

11. The fire resistant plywood panel of any of the claims 6 to 10, wherein
- the first glass fibre layer comprises a glass fibre core and
- the specific mass of the glass fibre core is from 15 g/m² to 800 g/m²; preferably from 20 g/m² to 90 g/m²; and more preferably from 25 g/m² to 30 g/m².

12. The fire resistant plywood panel of any of the claims 6 to 11, wherein
- the first surface veneer layer comprises a veneer or veneers having a first grain orientation,
- the first surface veneer layer is directly attached to a second veneer layer,
- the second veneer layer comprises a veneer or veneers having a second grain orientation, and
- the second veneer layer is arranged in relation to the first surface veneer layer such that the angle between the first grain orientation and the second grain orientation is at least 60 degrees; preferably at least 85 degrees.

13. The fire resistant plywood panel of any of the claims 6 to 12, wherein
- the first surface veneer layer comprises hardwood.

## Patentansprüche

1. Ein Verfahren zur Herstellung einer feuerbeständigen Sperrholzplatte, wobei das Verfahren Folgendes umfasst:
- Bereitstellen
• einer Sperrholzplatte mit mindestens drei Furnierschichten, wobei jede Furnierschicht mindestens ein Holzfurnier und Klebstoff zwischen den Furnierschichten aufweist, wobei die Furnierschichten in Richtung der Dicke der Sperrholzplatte zueinander angeordnet sind oder
• eines Vorformlings für eine Sperrholzplatte, die mindestens drei Furnierschichten aufweist, indem die Furniere oder Furnierschichten in Richtung der Dicke des Vorformlings für die Sperrholzplatte aufeinander geschichtet sind,
- Anordnen auf einer ersten Seite der Sperrholzplatte oder des Vorformlings für eine Sperrholzplatte
• eines zweiten Phenolfilms, der Papier und Phenolformaldehydharz aufweist, und
• einer ersten Glasfaserschicht, und
• eines ersten Phenolfilms, der Papier und Phenolformaldehydharz enthält, wobei
• der zweite Phenolfilm näher an der Sperrholzplatte oder am Vorformling für die Sperrholzplatte angeordnet ist als der erste Phenolfilm, und
• die erste Glasfaserschicht zwischen dem ersten und dem zweiten Phenolfilm belassen wird, wodurch sich eine Beschichtung für die Sperrholzplatte bzw. den Vorformling für die Sperrholzplatte bildet, so dass
• eine Richtung der Dicke der Beschichtung parallel zur Richtung der Dicke der Sperrholzplatte oder zur Richtung der Dicke des Vorformlings für die Sperrholzplatte verläuft; wodurch
- ein Vorformling für die feuerbeständige Sperrholzplatte gebildet wird, und
- der Vorformling für die feuerbeständige Sperrholzplatte bei einer ersten Temperatur und unter Anwendung eines ersten Drucks für eine erste Zeitspanne gepresst wird, um die feuerbeständige Sperrholzplatte zu bilden, so dass
• der erste Phenolfilm mit einem Pressteil einer ersten wirksamen Pressfläche gepresst wird, und
• (i) ein Bestandteil des ersten Phenolfilms oder des zweiten Phenolfilms oder (ii) ein Reaktionsprodukt des ersten Phenolfilms oder des zweiten Phenolfilms nicht siedet.

2. Verfahren gemäß Anspruch 1, umfassend
- Bereitstellen einer Sperrholzplatte, und Beschichten der Sperrholzplatte durch dieses
- Anordnen auf einer ersten Seite der Sperrholzplatte
• eines zweiten Phenolfilms, der Papier und Phenolformaldehydharz aufweist,
• einer ersten Glasfaserschicht und
• eines ersten Phenolfilms, der Papier und Phenolformaldehydharz enthält, wobei
• der zweite Phenolfilm näher an der Sperrholzplatte als der erste Phenolfilm angeordnet ist, und
• die erste Glasfaserschicht zwischen dem ersten und zweiten Phenolfilm belassen wird; wodurch
- ein Vorformling für die feuerbeständige Sperrholzplatte gebildet wird, und
- der Vorformling für die feuerbeständige Sperrholzplatte bei einer ersten Temperatur und unter Anwendung eines ersten Drucks für eine erste Zeitspanne gepresst wird, um die feuerbeständige Sperrholzplatte zu bilden, so dass der erste Phenolfilm mit einem Pressteil einer ersten wirksamen Pressfläche gepresst wird.

3. Verfahren gemäß Anspruch 1 oder 2, wobei
- der Pressteil der ersten wirksamen Pressfläche frei von solchen eindringenden Mustern ist, die eine eindimensionale Größe von höchstens 5 mm haben; und
- optional der Pressteil der ersten wirksamen Pressfläche frei von solchen eindringenden Mustern ist, die
• eine eindimensionale Größe von mindestens 5 mm haben, und
• einen Vorsprung aufweisen, und zwar so, dass
• die Gesamtfläche der Projektion der Vorsprünge des eindringenden Musters auf die Ebene der wirksamen Pressfläche mehr als 33 % der Fläche der Projektion des eindringenden Musters auf die Ebene der wirksamen Pressfläche beträgt.

4. Verfahren gemäß einem der Ansprüche 1 bis 3, wobei
- der Pressteil der ersten wirksamen Pressfläche frei von solchen eindringenden Mustern ist, die
• eine eindimensionale Größe von höchstens 5 mm haben, und
• eine Tiefe von mindestens 1 mm, vorzugsweise mindestens 0,5 mm und noch bevorzugter mindestens 0,2 mm haben.

5. Verfahren gemäß einem der Ansprüche 1 bis 4, wobei
- der Pressteil der ersten wirksamen Pressfläche eine mittlere Oberflächenrauheit Ra aufweist, die geringer als 0,05 mm ist und/oder
- der Pressteil der ersten wirksamen Pressfläche eine maximale Oberflächenrauheit Rt aufweist, die geringer als 0,1 mm ist.

6. Eine feuerbeständige Sperrholzplatte, geeignet für den Bodenbelag eines Fahrzeugs, wobei die feuerbeständige Sperrholzplatte Folgendes aufweist:
- ein Sperrholzteil mit einer ersten Länge, einer ersten Breite und einer ersten Dicke, wobei die erste Länge größer als oder gleich der ersten Breite und die erste Breite größer als oder gleich der ersten Dicke ist, und
- eine an dem Sperrholzteil angebrachte Beschichtung, wobei die Beschichtung eine zweite Dicke aufweist, deren Richtung parallel zu einer Richtung der ersten Dicke ist, wobei
- das Sperrholzteil Folgendes aufweist:
• mindestens drei in Richtung der ersten Dicke zueinander angeordnete Furnierschichten, wobei jede Furnierschicht mindestens ein Holzfurnier aufweist, und
• Klebstoff zwischen den Furnierschichten, wobei das Sperrholzteil aufweist:
• eine erste Oberflächen-Furnierschicht, wobei alle anderen Furnierschichten außer der ersten Oberflächen-Furnierschicht auf der gleichen Seite der ersten Oberflächen-Furnierschicht verbleiben, und
• eine zweite Oberflächen-Furnierschicht, wobei alle anderen Furnierschichten außer der zweiten Oberflächen-Furnierschicht auf der gleichen Seite der zweiten Oberflächen-Furnierschicht verbleiben, und
- die Beschichtung Folgendes aufweist:
• einen ersten Phenolfilm, der Papier und Phenolformaldehydharz aufweist,
• einen zweiten Phenolfilm, der Papier und Phenolformaldehydharz aufweist, und
• eine erste Glasfaserschicht zwischen dem ersten Phenolfilm und dem zweiten Phenolfilm, wobei
- der erste Phenolfilm gegebenenfalls durch weitere Schichten an der ersten Glasfaserschicht angebracht ist,
- der zweite Phenolfilm an der ersten Oberflächen-Furnierschicht des Sperrholzteils angebracht ist, und
- der zweite Phenolfilm gegebenenfalls durch weitere Schichten an der ersten Glasfaserschicht angebracht ist, wobei
eine schützende Oberfläche des ersten Phenolfilms, welche schützende Oberfläche nicht der ersten Glasfaserschicht zugewandt ist, einer Umgebung zum Schutz des Sperrholzteils vor Hitze und Feuchtigkeit der Umgebung ausgesetzt ist, wobei
- die schützende Oberfläche des ersten Phenolfilms frei von solchen erstarrten Siedetröpfchen ist, die Phenolformaldehydharz enthalten und eine eindimensionale Größe von 0,1 µm bis 500 µm haben.

7. Die feuerbeständige Sperrholzplatte gemäß Anspruch 6, wobei
(a)
- die schützende Oberfläche des ersten Phenolfilms frei von Mustern ist, oder
(b)
- die schützende Oberfläche des ersten Phenolfilms ein Muster aufweist; wobei die schützende Oberfläche auch einen Außenbereich aufweist, der sich außerhalb des Musters befindet,
- die durchschnittliche Rauheit der schützenden Oberfläche an dem Muster einen ersten Rauheitswert Raₚ aufweist,
- die durchschnittliche Rauheit der schützenden Oberfläche an dem Außenbereich einen zweiten Rauheitswert Raₛ aufweist, und
- der erste und zweite Rauheitswert annähernd gleich sind, d. h. 0,9 < Raₚ/Raₛ < 1,1.

8. Die feuerbeständige Sperrholzplatte gemäß Anspruch 6 oder 7, wobei
- die schützende Oberfläche des ersten Phenolfilms eine durchschnittliche Oberflächenrauheit Ra von weniger als 0,05 mm aufweist und/oder
- die schützende Oberfläche des ersten Phenolfilms eine maximale Oberflächen-Rauheit Rt aufweist, die geringer als 0,1 mm ist.

9. Die feuerbeständige Sperrholzplatte gemäß einem der Ansprüche 6 bis 8, wobei
- die Beschichtung Phenolformaldehydharz zwischen 30 Gew.-% und 80 Gew.-%; vorzugsweise zwischen 40 Gew.-% und 60 Gew.-% aufweist.

10. Die feuerbeständige Sperrholzplatte gemäß einem der Ansprüche 6 bis 9, wobei
- die erste Glasfaserschicht aus nicht gewebten Glasfasern besteht.

11. Die feuerbeständige Sperrholzplatte gemäß einem der Ansprüche 6 bis 10, wobei
- die erste Glasfaserschicht aus einem Glasfaserkern besteht und
- die spezifische Masse des Glasfaserkerns zwischen 15 g/m² und 800 g/m², vorzugsweise zwischen 20 g/m² und 90 g/m² und noch bevorzugter zwischen 25 g/m² und 30 g/m² beträgt.

12. Die feuerbeständige Sperrholzplatte gemäß einem der Ansprüche 6 bis 11, wobei
- die erste Oberflächen-Furnierschicht ein Furnier oder mehrere Furniere mit einer ersten Kornorientierung aufweist,
- die erste Oberflächen-Furnierschicht direkt auf eine zweite Furnierschicht aufgebracht wird,
- die zweite Oberflächen-Furnierschicht ein Furnier oder mehrere Furniere mit einer zweiten Kornorientierung aufweist, und
- die zweite Furnierschicht in Bezug auf die erste Oberflächen-Furnierschicht so angeordnet ist, dass der Winkel zwischen der ersten Kornorientierung und der zweiten Kornorientierung mindestens 60 Grad, vorzugsweise mindestens 85 Grad beträgt.

13. Die feuerbeständige Sperrholzplatte gemäß einem der Ansprüche 6 bis 12, wobei
- die erste Oberflächen-Furnierschicht Hartholz aufweist.

## Revendications

1. Procédé de fabrication d'un panneau de contreplaqué résistant au feu, le procédé comprenant les étapes suivantes :
- mettre à disposition :
• un panneau de contreplaqué comprenant au moins trois couches de placage, chaque couche de placage comprenant au moins un placage de bois et de l'adhésif entre les couches de placage, dans lequel les couches de placage sont disposées les unes par rapport aux autres dans la direction de l'épaisseur du panneau de contreplaqué ou
• une préforme de panneau de contreplaqué comprenant au moins trois couches de placage, en empilant les placages ou les couches de placage les un(e)s sur les autres dans la direction de l'épaisseur de la préforme du panneau de contreplaqué,
- disposer sur un premier côté du panneau de contreplaqué ou de la préforme d'un panneau de contreplaqué :
• un second film phénolique comprenant du papier et une résine phénol-formaldéhyde,
• une première couche de fibres de verre, et
• un premier film phénolique comprenant du papier et une résine phénol-formaldéhyde, moyennant quoi :
• le second film phénolique est disposé plus près du panneau de contreplaqué ou de la préforme du panneau de contreplaqué que le premier film phénolique et
• la première couche de fibres de verre est laissée entre le premier film phénolique et le second film phénolique, formant ainsi un revêtement pour le panneau de contreplaqué ou la préforme du panneau de contreplaqué, de manière que :
• une direction de l'épaisseur du revêtement soit parallèle à la direction de l'épaisseur du panneau de contreplaqué ou à la direction de l'épaisseur de la préforme du panneau de contreplaqué ; ce qui permet de :
- former une préforme du panneau de contreplaqué résistant au feu, et
- presser, à une première température, au moyen d'une première pression, pendant une première période de temps, la préforme du panneau de contreplaqué résistant au feu pour former le panneau de contreplaqué résistant au feu, de telle sorte que :
• le premier film phénolique soit pressé avec une partie de pressage d'une première surface de pressage efficace et
• (i) un constituant du premier film phénolique ou du second film phénolique ou (ii) un produit de réaction du premier film phénolique ou du second film phénolique n'entre pas en ébullition.

2. Procédé selon la revendication 1 comprenant les étapes suivantes :
- mettre à disposition un panneau de contreplaqué, et revêtir le panneau de contreplaqué au moyen de :
- la disposition sur un premier côté du panneau de contreplaqué :
• d'un second film phénolique comprenant du papier et une résine phénol-formaldéhyde,
• d'une première couche de fibres de verre, et
• d'un premier film phénolique comprenant du papier et une résine phénol-formaldéhyde, moyennant quoi :
• le second film phénolique est disposé plus près du panneau de contreplaqué que le premier film phénolique et
• la première couche de fibres de verre est laissée entre le premier film phénolique et le second film phénolique ; ce qui permet de :
- former une préforme du panneau de contreplaqué résistant au feu, et
- presser, à une première température, au moyen d'une première pression et pendant une première période de temps, la préforme du panneau de contreplaqué résistant au feu pour former le panneau de contreplaqué résistant au feu, de telle sorte que le premier film phénolique soit pressé avec une partie de pressage d'une première surface de pressage efficace.

3. Procédé selon la revendication 1 ou 2, dans lequel :
- la partie de pressage de la première surface de pressage efficace est dépourvue de motifs pénétrants tels qu'ils présentent une taille unidimensionnelle d'au plus 5 mm ; et
- éventuellement, la partie de pressage de la première surface de pressage efficace est dépourvue de motifs pénétrants tels qu'ils :
• présentent une taille unidimensionnelle d'au moins 5 mm, et
• comprennent une protubérance, de telle sorte que :
• l'aire totale de la saillie des protubérances du motif pénétrant, dans le plan de la surface de pressage efficace représente plus de 33 % de l'aire de la saillie du motif pénétrant, dans le plan de la surface de pressage efficace.

4. Procédé selon l'une quelconque des revendications 1 à 3, dans lequel :
- la partie de pressage de la première surface de pressage efficace est dépourvue de motifs pénétrants tels qu'ils :
• présentent une taille unidimensionnelle d'au plus 5 mm, et
• présentent une profondeur d'au moins 1 mm ; de préférence d'au moins 0,5 mm et de préférence encore d'au moins 0,2 mm.

5. Procédé selon l'une quelconque des revendications 1 à 4, dans lequel :
- la partie de pressage de la première surface de pressage efficace présente une rugosité moyenne de surface Ra qui est inférieure à 0,05 mm et/ou
- la partie de pressage de la première surface de pressage efficace présente une rugosité maximale de surface Rt qui est inférieure à 0,1 mm.

6. Panneau de contreplaqué résistant au feu, approprié pour le plancher d'un véhicule, le panneau de contreplaqué résistant au feu comprenant :
- une partie contreplaqué présentant une première longueur, une première largeur et une première épaisseur, la première longueur étant supérieure ou égale à la première largeur et la première largeur étant supérieure ou égale à la première épaisseur, et
- un revêtement fixé à la partie contreplaqué, le revêtement présentant une seconde épaisseur dont la direction est parallèle à une direction de la première épaisseur, dans lequel :
- la partie contreplaqué comprend :
• au moins trois couches de placage disposées les unes par rapport aux autres dans la direction de la première épaisseur, chaque couche de placage comprenant au moins un placage de bois et
• de l'adhésif entre les couches de placage, moyennant quoi la partie contreplaqué comprend :
• une première couche de placage de surface, dans lequel toutes les couches de placage autres que la première couche de placage de surface restent du même côté de la première couche de placage de surface, et
• une seconde couche de placage de surface, dans lequel toutes les couches de placage autres que la seconde couche de placage de surface restent du même côté de la seconde couche de placage de surface, et
- le revêtement comprend :
• un premier film phénolique comprenant du papier et une résine phénol-formaldéhyde,
• un second film phénolique comprenant du papier et une résine phénol-formaldéhyde, et
• une première couche de fibres de verre entre le premier film phénolique et le second film phénolique, dans lequel :
- le premier film phénolique est fixé, éventuellement par l'intermédiaire d'autres couches, à la première couche de fibres de verre,
- le second film phénolique est fixé à la première couche de placage de surface de la partie contreplaqué, et
- le second film phénolique est fixé, éventuellement par l'intermédiaire d'autres couches, à la première couche de fibres de verre, moyennant quoi :
une surface de protection du premier film phénolique, laquelle surface de protection n'est pas en regard de la première couche de fibres de verre, est exposée à un environnement pour protéger la partie contreplaqué de la chaleur et de l'humidité de l'environnement, dans lequel :
- la surface de protection du premier film phénolique est dépourvue de gouttelettes bouillantes solidifiées qui comprennent de la résine phénol-formaldéhyde et présentent une taille unidimensionnelle allant de 0,1 µm à 500 µm.

7. Panneau de contreplaqué résistant au feu selon la revendication 6, dans lequel :
(a)
- la surface de protection du premier film phénolique est dépourvue de motifs, ou
(b)
- la surface de protection du premier film phénolique comprend un motif ; moyennant quoi la surface de protection comprend également une aire extérieure qui est à l'extérieur du motif,
- la rugosité moyenne de la surface de protection au niveau du motif a une première valeur de rugosité Ra_{P},
- la rugosité moyenne de la surface de protection au niveau de l'aire extérieure a une seconde valeur de rugosité Raₛ, et
- les première et seconde valeurs de rugosité sont à peu près égales, à savoir 0,9 < Ra_{P}/Raₛ < 1,1.

8. Panneau de contreplaqué résistant au feu selon la revendication 6 ou 7, dans lequel :
- la surface de protection du premier film phénolique présente une rugosité moyenne de surface Ra qui est inférieure à 0,05 mm et/ou
- la surface de protection du premier film phénolique présente une rugosité maximale de surface Rt qui est inférieure à 0,1 mm.

9. Panneau de contreplaqué résistant au feu selon l'une quelconque des revendications 6 à 8, dans lequel :
- le revêtement comprend de la résine phénol-formaldéhyde à raison de 30 % en poids à 80 % en poids ; de préférence à raison de 40 % en poids à 60 % en poids.

10. Panneau de contreplaqué résistant au feu selon l'une quelconque des revendications 6 à 9, dans lequel :
- la première couche de fibres de verre comprend des fibres de verre non tissées.

11. Panneau de contreplaqué résistant au feu selon l'une quelconque des revendications 6 à 10, dans lequel :
- la première couche de fibres de verre comprend un cœur en fibres de verre et
- la masse surfacique du cœur en fibres de verre va de 15 g/m² à 800 g/m² ; de préférence de 20 g/m² à 90 g/m² ; et de préférence encore de 25 g/m² à 30 g/m².

12. Panneau de contreplaqué résistant au feu selon l'une quelconque des revendications 6 à 11, dans lequel :
- la première couche de placage de surface comprend un ou des placage(s) ayant un premier fil du bois,
- la première couche de placage de surface est directement fixée à une seconde couche de placage,
- la seconde couche de placage comprend un ou des placage(s) ayant un second fil du bois, et
- la seconde couche de placage est disposée par rapport à la première couche de placage de surface de manière que l'angle entre le premier fil du bois et le second fil du bois soit d'au moins 60 degrés ; de préférence d'au moins 85 degrés.

13. Panneau de contreplaqué résistant au feu selon l'une quelconque des revendications 6 à 12, dans lequel :
- la première couche de placage de surface comprend du bois dur.
